# EUROPEAN PATENT SPECIFICATION

(11) **EP 1 207 703 B1**
(45) Date of publication and mention of the grant of the patent: **18.08.2004**
(21) Application number: 02000567.4
(22) Date of filing: 11.12.1996
(51) Int. Cl.: H04Q 3/00, H04L 29/06

(54) **Accessing communications data**
Zugriff zu Kommunikationsdateien
Acces à des données de communication

(30) Priority: 20.02.1996 GB 9603590
(43) Date of publication of application: 22.05.2002
(62) Divisional of application: 96941768.2
(73) Proprietor: Hewlett-Packard Company, Palo Alto, CA 94304 (US)
(72) Inventor: Low, Colin, Gloucestershire GL 12 7LT (GB); Seaborne, Andrew Franklin, Bristol BS9 3HR (GB)
(74) Representative: Squibbs, Robert Francis

(56) References cited:
- TAO ET AL.: "Internet access via baseband and broadband ISDN gateways" INTERNATIONAL CONFERENCE ON COMPUTERS AND COMMUNICATIONS, 12 April 1994 (1994-04-12), pages 485-490, XP000462600 PHOENIX US
- BONETTI ET AL.: "Distribution of RFC 1327 mapping rules via the Internet DNS: the INFNet distributed gateway system" COMPUTER NETWORKS AND ISDN SYSTEMS, vol. 27, no. 3, December 1994 (1994-12), pages 461-469, XP000483278 AMSTERDAM NL
- COMER ET AL.: "Uniform access to Internet directory services" COMPUTER COMMUNICATIONS REVIEW, vol. 20, no. 4, September 1990 (1990-09), pages 50-59, XP000168041 NEW YORK US
- SEVCIK ET AL.: "Customers in driver's seat: Private Intelligent Network Control Point" ISS '95 WORLD TELECOMMUNICATIONS CONGRESS, vol. 2, 23 April 1995 (1995-04-23), pages 41-44, XP000495622 BERLIN DE

## Description

### Field of the Invention

The present invention relates to a method of accessing communications data about a target entity. The present invention finds particular application to the provision of IN (Intelligent Network) services in a switched telecommunications system.

As used herein, the term "switched telecommunication system" means a system comprising a bearer network with switches for setting up a bearer channel through the network. The term "switched telecommunication system" is to be taken to include not only the existing public and private telephone systems (whether using analogue phones or ISDN-based), but also broadband (ATM) and other switch-based bearer networks that are currently being implemented or may emerge in the future. For convenience, the term "switched telecommunication system" is sometimes shortened herein to telecommunication system.

Reference to a "call" in the context of a switched telecommunication system is to be understood as meaning a communication through a bearer channel set up across the bearer network, whilst references to call setup, maintenance and takedown are to be taken to mean the processes of setting up, maintaining and taking down a bearer channel through the bearer network. Terms such as "call processing" and "call handling" are to be similarly interpreted.

The term "communication system" when used herein should be understood as having a broader meaning than switched telecommunication system, and is intended to include datagram-based communication systems where each data packet is independently routed through a bearer network without following a predetermined bearer channel.

### Background of the Invention

Telecommunication companies running PSTNs (Public Switched Telephone Networks) and PLMNs (Public Land Mobile Networks) are in the business of providing communication services and in doing so are providing increasing built-in intelligence in the form of "IN services" such as 800 number services and call forwarding. In contrast, the World Wide Web (WWW), which has seen explosive growth in recent times, is an example of an Internet-based global network providing complex information services. These two worlds, that of the large communications utilities and that of the highly dynamic, pioneer-spirit WWW information culture, are uneasy companions and each plans to encroach on the domain previously occupied by the others; thus telephony services will be offered over the WWW and information services over the public communication infrastructure.

The present invention proposes technologies for a more synergetic relationship between these two worlds than is currently envisaged and in order to place the present invention in context, a review will first be given of each of these two worlds.

### Telephone Networks with IN Services

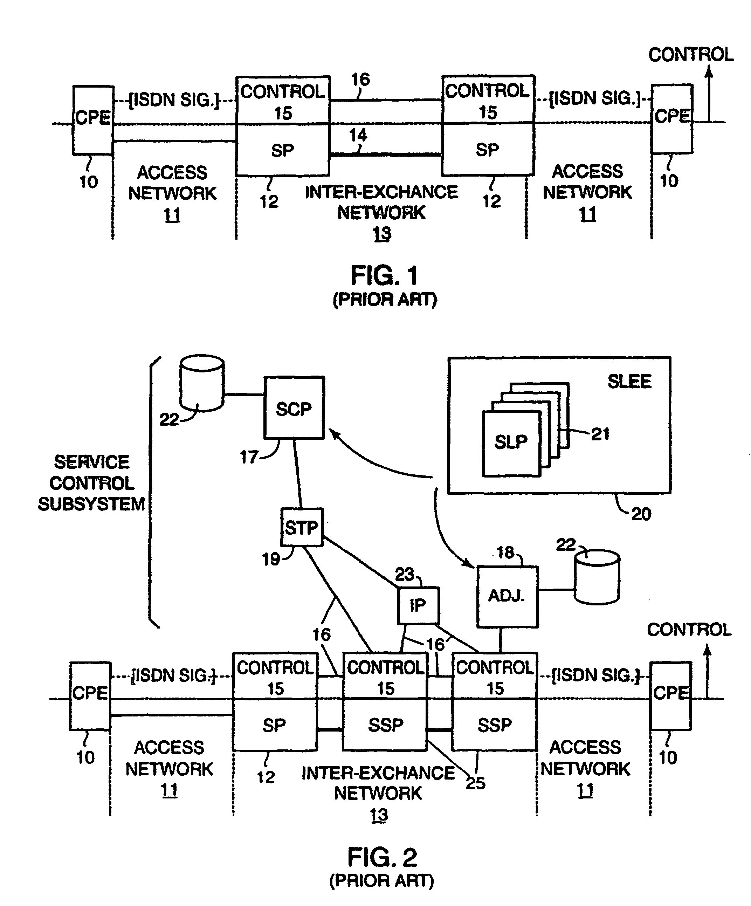

**The Basic PSTN.** The basic service provided by a PSTN (Public Switched Telephone Network) is the interconnection of two telephones (that is, setting up a bearer channel between the telephones) according to a called-party telephone number input at the calling-party telephone. Figure 1 is a simplified representation of a PSTN providing such a service. In particular, customer premises equipment, CPE, 10 (such as standard analogue telephones, but also more recently ISDN terminals) are connected through an access network 11 to switching points, SPs 12. The SPs 12 form nodes in an inter-exchange network 13 made up of interconnecting trunks 14 and SPs that are controlled by control entities 15 in the SPs. The control effected by the control entities 15 is determined by signalling inputs received from the CPEs and other SPs, and involves call setup, maintenance and clearance to provide the desired bearer channel between calling CPE and called CPE. Conceptually, the PSTN may be thought of as a bearer network and a control (signalling) network, the function of the latter being to effect call control through the bearer network, namely the control of setup, maintenance and take down of bearer channels through the bearer network; in practice, the bearer and signalling networks may use the same physical circuits and even the same logical channels.

Thus, where the CPE is a traditional dumb telephone, control signalling between the CPE and its local SP is in-band signalling, that is, the signalling is carried on the same channel as used for voice; this signalling is interpreted and converted at the SPs 12 into signalling between SPs that uses a dedicated common-channel signalling network 16 (implemented nowadays using the SS7 protocol suite). Where the CPE is an ISDN terminal, signalling is carried in a separate channel directly from the CPE on an end-to-end. Modern SPs use the ISUP (ISDN User Part) SS7 protocol for inter-exchange call control signalling whether the CPE is a standard telephone or an ISDN terminal.

**Telephone Numbering Plans -** As certain aspects of the present invention are influenced by the structuring of telephone numbers, a brief description will now be given of the structuring of such numbers. Telephone numbers form an international, hierarchical addressing scheme based on groups of decimal digits. The top level of the hierarchy is administered by the ITU-T, which has allocated single-digit numeric codes to the major geographic zones (for example "1" for North America, "2" for Africa, "3" for Europe, "4" for Europe, "5" for South America and Cuba, etc.). Within each zone countries are assigned 2 or 3 digit codes, so that within zone 3 France is "33", and within zone 4 the UK is "44". Administration of the numbering plan within a country is delegated to a national body, such as the Office of Telecommunications ("Oftel") in the UK. The following further description is based on the UK numbering plan, but the scheme described will be recognised as having widespread applicability.

In the UK all national numbers are prefixed by a code from 01 to 09 (the '0' prefix is dropped in international dialling). The currently assigned codes are "01" for Geographic Area Codes, "02" for Additional Geographic Area Codes, "04" for Mobile Services, "07" for Personal Numbers, and "08" for Special Service (freephone, information). Normal wireline PSTN subscriber telephone numbers are allocated from the Geographic Area Code codes, and currently only codes prefixed by 01 are allocated. Geographic area codes are presently 3 or 4 digits (excluding the leading '0') and there are currently 638 geographic areas each with its own code. A full national UK dialled number takes two forms:

| | | |
|---|---|---|
| **0** | **171** | **634 8700** |
| | area code | local number (7 digit) |
| **0** | **1447** | **456 987** |
| | area code | local number (6 digit) |

The first case has the '0' prefix, a 3 digit area code and a 7 digit local number, and the second case has the '0' prefix, a 4 digit area code, and a 6 digit local number. Further interpretation of the local number will take place within the area exchange, as even a 6 digit address space is too large for a single switch, and for a typical local area several switches may be needed to host the required number of subscriber lines. This interpretation is opaque and is a matter for the area service provider.

In the current PSTN the inherently hierarchical and geographic interpretation of telephone numbers is mirrored by the physical architecture of the network. A telephone number is structured in a way that makes it easy to route a call through the network. At each step, the prefix of the number provides information about the current routing step, and the suffix (perhaps opaquely) provides information about subsequent routing steps; as long as a switch knows how to parse a prefix and carry out a routing step, it does not need to understand the content of the suffix, which is left for subsequent routing steps. For this reason the international and national switching fabric is also organised hierarchically.

**Intelligent Networks.** Returning now to a consideration of the current telephone network infrastruture, in addition to basic call handling, an SP may also serve to provide what are called IN (Intelligent Network) services; in this case the SP is termed a service switching point, SSP. An SSP 25 is arranged to suspend call processing at defined points-in-call upon particular criteria being met, and to delegate the continuation of call processing to a service control subsystem providing a service control function (SCF) either in the form of a service control point, SCP 17 (see Figure 2) or an Adjunct 18. The Adjunct 18 is directly associated with an SSP 25 whilst the SCP 17 and SSP 25 communicate with each other via an extended common channel signalling (CCS) network 16 that may include signal transfer points (STP) 19. The SCP 17 may be associated with more than one SSP 25. Both the SCP 17 and Adjunct 18 provide a service logic execution environment (SLEE) 20 in which instances of one or more service logic programs (SLP) 21 can execute. The SLEE 20 and SLP 21 together provide service control functionality for providing services to the SSP 25.

Service logic running in an SCP or Adjunct will generally make use of subscriber information stored in a service data function (SDF) 22 that may be integral with the SCP/Adjunct or partially or wholly separate therefrom. The service data function (SDF), like the service control function (SCF) forms part of the service control subsystem of the PSTN. It may be noted that some or all of the service control function may be built into the PSTN switches themselves.

In addition to the SCP 17 and Adjunct 18, the Figure 2 network includes an intelligent peripheral (IP) 23. The IP 23 provides resources to the SSP 25 such as voice announcements and DTMF digit collection capabilities. The network will also include an operation system (not shown) that has a general view of the network and its services and performs functions such as network monitoring and control.

In operation, when the SSP 25 receives a call, it examines internal trigger conditions and, possibly, user information (eg dialled digits) to ascertain if the call requires a service to be provided by the service control subsystem 17, 18; the checking of trigger conditions may be carried out at several different points in call processing. Where the SSP 25 determines that a service is required it messages the service control subsystem (either SCP 17 or Adjunct 18) requesting the desired service and sending it a logic representation of the call in terms of its connectivity and call processing status. The service control subsystem then provides the requested service and this may involve either a single interaction between the SSP and service control subsystem or a session of interactions. A typical service is call forwarding which is a called-party service giving expression to an end-user requirement as simple as "if you call me on number X and it rings ten times, try calling number Y". In this case, it is the SSP local to the called end-user that triggers its associated SCP (or Adjunct) to provide this service; it will, of course, be appreciated that the SSP must be primed to know that the service is to be provided for a called number X.

The above-described model for the provision of IN services in a PSTN can also be mapped onto PLMNs (Public Land Mobile Networks) such as GSM and other mobile networks. Control signalling in the case of a mobile subscriber is more complex because in addition to all the usual signalling requirements, there is also a need to establish where a call to a mobile subscriber should be routed; however, this is not a very different problem from a number of called-party IN services in the PSTN. Thus in GSM, the service data function (SDF) is largely located in a system named a Home Location Register (HLR) and the service control function in a system named a Visitor Location Register (VLR) that is generally associated on a one-to-one basis with each SSP (which in GSM terminology is called a Mobile Switching Centre, MSC).

Because subscribers are mobile, the subscriber profile is transported from the HLR to whichever VLR happens to be functionally closest to be mobile subscriber, and from there the VLR operates the (fixed) service using the subscriber profile and interacts with the SSP. The HLR and VLR thus constitute a service control subsystem similar to an SCP or Adjunct with their associated databases.

It is, of course, also possible to provide IN services in private telephone systems and, in this case, the service control function and service data function are generally either integrated into a PABX (Private Automatic Branch Exchange) or provided by a local computer. The service control subsystem, whilst present, may thus not be a physically distinct from the PABX.

The above-described general architectural framework for providing IN services has both strengths and flaws. Its main strength is that it works and many services have been successfully deployed, such as 800 number services, credit card calling, voicemail, and various call waiting and redirection services. However, despite years of standardisation, services are still implemented one-at-a-time on proprietary platforms and do not scale well. The approach has been based on large, fault-tolerant systems which provide services for hundreds of thousands or even millions of subscribers and take years to deploy. Furthermore, since the networks used to support these services also constitute the basic telephone infrastructure, anything attached to these networks must be rigorously vetted. Additionally, each country and operator tends to have local variations of the so-called standards making it difficult to supply standard products and thereby braking the dynamics of competition.

### The World Wide Web

In contrast to the slow deliberate progress of the telephone infrastructure, the WWW has grown explosively from its inception in 1989 to become the primary electronic information distribution service in terms of spread, availability and richness of information content. Anyone can, for a modest outlay, become an information provider with a world-wide audience in a highly interconnected information architecture.

The WWW is a client-server application running over the Internet and using a client-server protocol which mandates only the simplest of exchanges between client and server. This protocol is HTTP (Hyper Text Transfer Protocol) which is optimised for use over TCP/IP networks such as the Internet; the HTTP protocol can, however, also be used over networks using different communication protocol stacks.

Since the availability of literature concerning the WWW has seen the same sort of growth as the WWW itself, a detailed description of the WWW, HTTP and the Internet will not be given herein. An outline description will, however, be given with attention being paid to certain features of relevance to the present invention.

The WWW uses the Internet for interconnectivity. Internet is a system that connects together networks on a worldwide basis. Internet is based on the TCP/IP protocol suite and provides connectivity to networks that also use TCP/IP. For an entity to have a presence on the Internet, it needs both access to a network connected to the Internet and an IP address. IP addresses are hierarchically structured. Generally an entity will be identified at the user level by a name that can be resolved into the corresponding IP address by the Domain Name System (DNS) of the Internet. Because the DNS or adaptions of it are fundamental to at least certain embodiments of the invention described hereinafter, a description will next be given of the general form and operation of the DNS.

**The Domain Name System -** The DNS is a global, distributed, database, and without its performance, resilience and scalability much of the Internet would not exist in its current form. The DNS, in response to a client request, serves to associate an Internet host domain name with one or more Registration Records (RR) of differing types, the most common being an address (A) record (such as 15.144.8.69) and mail exchanger (MX) records (used to identify a domain host configured to accept electronic mail for a domain). The RRs are distributed across DNS name servers world-wide, these servers cooperating to provide the domain name translation service; no single DNS server contains more than a small part of the global database, but each server knows how to locate DNS servers which are "closer" to the data than it is. For present purposes, the main characteristics of the DNS of interest are:
-- The host name space is organised as a tree-structured hierarchy of nodes with each host having a corresponding leaf node; each node has a label (except the root node) and each label begins with an alphabetic character and is followed by a sequence of alphabetic characters or digits. The full, or "fully qualified" name of a host is the string of node labels, each separated by a ".", from the corresponding leaf node to the root node of the hierarchy, this latter being represented by a terminating "." in the name. Thus a host machine "fred" of Hewlett-Packard Laboratories in Bristol, England will have a fully qualified domain name of "fred.hpl.hp.com." (note that if a host name does not have a terminal "." it is interpreted relative to the current node of the naming hierarchy).
-- Each host has one or more associated Registration Records (RRs).
-- There are a plurality of DNS servers each with responsibility for a subtree of the name space. A DNS server will hold RRs for all or part of its subtree - in the latter case it delegates responsibility for the remainder of the subtree to one or more further DNS servers. A DNS server knows the address of any server to which it has delegated responsibility and also the address of the server which has given it the responsibility for the subtree it manages. The DNS servers thus point to each other in a structuring reflecting that of the naming hierarchy.
-- An application wishing to make use of the DNS does so through an associated "resolver" that knows the address of at least one DNS server. When a DNS server is asked by this resolver for an RR of a specified host, it will return either the requested RR or the address of a DNS server closer to the server holding the RR in terms of traversal of the naming hierarchy. In effect, the hierarchy of the servers is ascended until a server is reached that also has responsibility for the domain name to be resolved; thereafter, the DNS server hierarchy is descended down to the server holding the RR for the domain name to be resolved.
-- The DNS uses a predetermined message format (in fact, it is the same for query and response) and uses the IP protocols.
These characteristics of the DNS may be considered as defining a "DNS-type" system always allowing for variations in label syntax, how the labels are combined (ordering, separators), the message format details, and the IP protocols.

Due to the hierarchical naming structure, it is possible to delegate responsibility for administering domains (subtrees) of the name space recursively. Thus, the top-level domains are administered by InterNic (these top-level domains include the familiar 'com', 'edu', 'org', 'int', 'net', 'mil' domains as well as top-level country domains specified by standard two-letter codes such as 'us', 'uk', 'fr' etc.). At the next level, by way of example Hewlett-Packard Company is responsible for all names ending in 'hp.com' and British Universities are collectively responsible for all names ending in 'ac.uk'. Descending further, and again by way of example, administration of the domain 'hpl.hp.com' is the responsibility of Hewlett-Packard Laboratories and administration of the subtree (domain) 'newcastle.ac.uk' is the responsibility of the University of Newcastle-upon-Tyne.

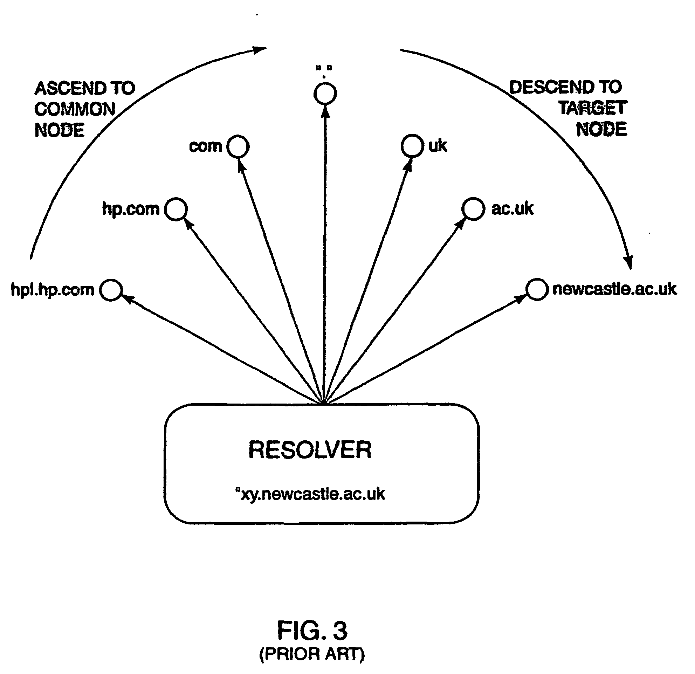

Figure 3 illustrates the progress of an example query made from within Hewlett-Packard Laboratories. The host domain name to be resolved is 'xy.newcastle.ac.uk', a hypothetical machine at the University of Newcastle, United Kingdom. The query is presented to the DNS server responsible for the "hpl.hp.com" subtree. This server does not hold the requested RR and so responds with the address of the "hp.com" DNS server; this server is then queried and responds with the address of the 'com' DNS server which in turn responds with the address of the '.' (root) DNS server. The query then proceeds iteratively down the 'uk' branch until the 'newcastle.ac.uk' server responds with the RR record for the name 'xy' in its subtree.

This looks extremely inefficient, but DNS servers are designed to build a dynamic cache, and are initialised with the addresses of several root servers, so in practice most of the iterative queries never take place. In this case the 'hpl.hp.com' DNS server will know the addresses of several root servers, and will likely have the addresses of 'uk' and 'ac.uk' servers in its cache. The first query to the 'hpl.hp.com' server will return the address of the 'ac.uk' server. The second query to the 'ac.uk' server will return the address of the 'newcastle.ac.uk' server, and the third query will return the RR in question. Any future queries with a 'newcastle.ac.uk' prefix will go direct to the newcastle DNS server as that address will be retained in the "hpl.hp.com" DNS server cache. In practice names within a local subtree are resolved in a single query, and names outside the local subtree are resolved in two or three queries.

Rather than a resolver being responsible for carrying out the series of query iterations required to resolve a domain name, the resolver may specify its first query to be recursive in which case the receiving DNS server is responsible for resolving the query (if it cannot directly return the requested RR, it will itself issue a recursive query to a 'closer' DNS server, and so on).

It should also be noted that in practice each DNS server will be replicated, that is, organised as a primary and one or more secondaries. A primary DNS nameserver initialises itself from a database maintained on a local file system, while a secondary initialises itself by transferring information from a primary. A subtree will normally have one primary nameserver and anything up to ten secondaries - the limitation tends to be the time required by the secondaries to update their databases from the primary. The primary database is the master source of subtree information and is maintained by the domain DNS administrator. The secondaries are not simply standby secondaries but each actively participates in the DNS with dependent servers that point to it rather than to the corresponding primary.

DNS implementations, such as BIND, are widely available as a standard part of most UNIX systems, and can claim to be among the most robust and widely used distributed applications in existence.

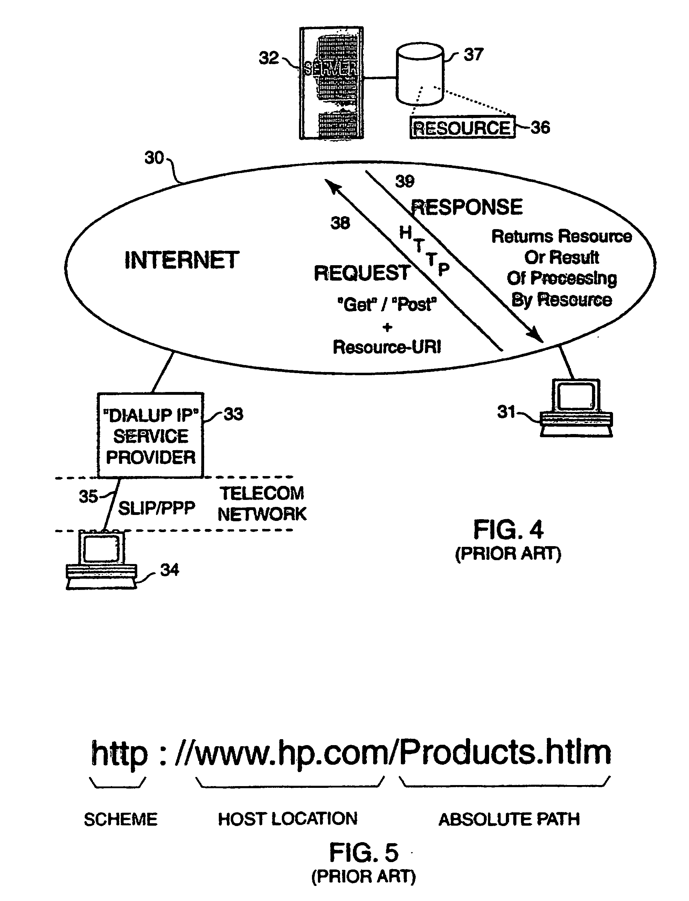

**Operation of the WWW** Referring now to Figure 4 of the accompanying drawings, access to the Internet 30 may be by direct connection to a network that is itself directly or indirectly connected to the Internet; such an arrangement is represented by terminal 31 in Figure 4 (this terminal may, for example, be a Unix workstation or a PC). Having a connection to the Internet of this form is known as having 'network access'. Any entity that has network access to the Internet may act as a server on the Internet provided it has sufficient associated functionality; in Figure 4, entity 32 with file store 37 acts as a server.

Many users of the WWW do not have network access to the Internet but instead access the Internet via an Internet service provider, ISP, 33 that does have network access. In this case, the user terminal 34 will generally communicate with the ISP 33 over the public telephone system using a modem and employing either SLIP (Serial Line Interface Protocol) or PPP (Point-to-Point Protocol). These protocols allow Internet packets to traverse ordinary telephone lines. Access to the Internet of this form is known as "dialup IP" access. With this access method, the user terminal 34 is temporarily allocated an IP address during each user session; however, since this IP address may differ between sessions, it is not practical for the entity 34 to act as a server.

A cornerstone of the WWW is its ability to address particular information resources by means of an Uniform Resource Identifier (URI) that will generally be either a Uniform Resource Locator (URL) that identifies a resource by location, or a Uniform Resource Name (URN) that can be resolved into an URL. By way of example, a full or "absolute" URL will comprise the following elements:
- scheme -: this is the access scheme to be used to access the resource of interest;
- host -: the Internet host domain name or IP address;
- port -: the host port for the (TCP) connection;
- abs-path -: the absolute path of the resource on the host.

In fact, the 'port' may be omitted in which case port 80 is assumed.

Figure 5 of the accompanying drawings shows an example URL for the Hewlett-Packard products welcome page. In this case, the elements are:
- scheme -: http
- host -: www.hp.com
- port -: omitted (port 80 assumed)
- abs-path -: Products.html

The HTTP protocol is based on a request/response paradigm. Referring again to Figure 4 of the drawings, given a particular URI identifying a resource 30 to be accessed, a client establishes a connection with the server 31 corresponding to the "host" element of the URI and sends a request to the server. This request includes a request method, and the "Request-URI" (which is generally just the absolute path of the resource on the server as identified by the "abs-path" element of the URI); the request may include additional data elements. The server 31 then accesses the resource 36 (here held on storage 37) and responds and this response may include an entity of a type identified by a MIME (Multipurpose Internet Mail Extensions) type also included in the response.

The two main request methods are:
- GET -: This method results in the retrieval of whatever information (in the form of an entity) is identified by the Request-URI. It is important to note that if the Request-URI refers to a data-producing process, it is the produced data which is returned as the entity in the response and not the source text of the process.
- POST -: This method is used to request that the destination server accept the entity enclosed in the request as a new subordinate of the resource identified by the Request-URI. The POST method can be used for annotation of existing resources, providing a message to a bulletin board, providing data to a data-handling process (for example, data produced as the result of submitting a form), and extending a database through an append operation.

In summary, the GET method can be used to directly retrieve data, or to trigger any process that will return an entity ( which may either be data or a simply an indication of the result of running the process). The POST method is used for registering data and specifying this method is also effective to trigger a process in the server to handle the posted data appropriately.

The passing of information to a process triggered to run on a server using either the GET or POST method is currently done according to an interface called the Common Gateway Interface (CGI). The receiving process is often written in a scripting language though this is not essential. Typically, the triggered server script is used for interfacing to a database to service a query included in a GET request. Another use, already referred to, is to append data associated with a POST request to a database.

Other important factors in the success of the WWW is the use of the HyperText Markup Language (HTML) for representing the makeup of documents transferred over the WWW, and the availability of powerful graphical Web browsers, such as Netscape and Mosaic, for interpreting such documents in a client terminal to present them to a user. Basically, HTML is used to identify each part of a document, such as a title, or a graphic, and it is then up to the browser running in the client terminal to decide how to display each document part. However, HTML is more than this - it also enables a URI and a request method to be associated with any element of a document (such as a particular word or an image) so that when a user points to and clicks on that element, the resource identified by the URI is accessed according to the scheme (protocol) and request method specified. This arrangement provides a hyperlink from one document to another. Using such hyperlinks, a user at a client terminal can skip effortlessly from one document downloaded from a server on one side of the world, to another document located on a server on the other side of the world. Since a document created by one author may include a hyperlink to a document created by another, an extremely powerful document cross-referring system results with no central bureaucratic control.

Hyperlinks are not the only intelligence that can be built into an HTML document. Another powerful feature is the ability to fill in a downloaded "Form" document on screen and then activate a 'commit' graphical button in order to have the entered information passed to a resource (such as a database) designed to collect such information. This is achieved by associating the POST request method with the 'commit' button together with the URI of the database resource; activating the 'commit' button results in the entered information being posted to the identified resource where it is appropriately handled.

Another powerful possibility is the association of program code (generally scripts to be interpreted) with particular documents elements, such as graphical buttons, this code being executed upon the button being activated. This opens up the possibility of users downloading program code from a resource and then running the code.

It will be appreciated by persons skilled in the art that HTML is only one of several currently available scripting languages delivering the functionality outlined above and it may be expected that any serious Web browser will have built-in support for multiple scripting languages. For example, Netscape 2.0 supports HTML 3.0, Java and LiveScript (the latter being Netscape proprietary scripting Language).

The importance of the role of the graphical Web browser itself should not be overlooked. As well as the ability to support multiple scripting languages, a Web browser should provide built-in support for standard media types, and the ability to load and execute programs in the client, amongst other features. These browsers may be viewed as operating systems for WWW interaction.

### WWW and the Telephone Network

It is possible to provide a telephony service over the Internet between connected terminals by digitising voice input and sending it over the Internet in discrete packets for reassembly at the receiving terminal. This is an example of a communication service on the Internet. Conversely, it is possible to point to a variety of information services provided over the telephone system, such as the Minitel system widely available in France. However, these encroachments into each anothers traditional territories pose no real threat to either the Internet or the public telephone system.

Of more interest are areas of cooperative use of the Internet and the telephone system. In fact, one such area has existed for some considerable time and has been outlined above with reference to Figure 4, namely the use of a modem link over the PSTN from a user computer 34 to an Internet service provider 33 in order to obtain dialup IP access to the Internet. This cooperative use is of a very simple nature, namely the setting up of a bearer channel over the PSTN for subsequently generated Internet traffic; there is no true interaction between the Internet and the PSTN.

Another known example of the cooperative use of the Internet and PSTN is a recently launched service by which an Internet user with a sound card in his/her terminal computer can make a voice call to a standard telephone anywhere in the world. This is achieved by transferring digitised voice over the Internet to a service provider near the destination telephone; this service provider then connects into the local PSTN to access the desired phone and transfers across into the local PSTN the voice traffic received over the Internet. Voice input from the called telephone is handled in the reverse manner. Key to this service is the ability to identify the service provider local (in telephony charging terms) to the destination phone. This arrangement, whilst offering the prospect of competition for the telecom operators for long distance calls, is again a simple chaining together of the Internet and PSTN. It may, however, be noted that in this case it is necessary to provide at least a minimum of feedback to the Internet calling party on the progress of call set to the destination telephone over the PSTN local to that telephone; this feedback need only be in terms of whether or not the call has succeeded.

From the foregoing it can be seen that the current cooperative use of the Internet and telephone system is at a very simple level.

Other prior art of relevance includes:
- "Internet Access via Baseband and Broadband ISDN Gateways" (Tao J et al International Conference on Computers and Communications, Phoenix, p485-490 April 1994) - this article describes the design and implementation of an ISDN to Internet gateway using the TCP/IP protocol suite;
- "Distribution of RFC 1327 Mapping Rules via the Internet DNS: the INFNet distributed Gateway System" (Bonetti et al, Computer Networks and ISDN Systems, vol. 27, No.3 Amsterdam Dec 1994) - this article describes a method of distributing, via the DNS, mapping rules for use by gateways between X400 and RFC822/SMTP mail protocols;
- Principles of Operation for the TPC.INT Subdomain: Remote Printing -Technical Procedures" (Internet Engineering Task Force RFC 1528, October 1993) - this RFC describes a procedure for ascertaining an e-mail address to which a fax message can be sent over the public Internet, the receiving entity being intended to forward the fax over the local telephone network to the destination fax machine. This procedure involves parsing the destination fax number into a domain name by treating each digit as a separate domain name label. For each such domain name, the domain name system holds a standard MX resource record containing a corresponding email address.

It is an object of the present invention to employ internet technology to facilitate access to a target entity over a communications network when starting with a telephone number.

### Summary of the Invention

According to one aspect of the present invention, there is provided a method of accessing communication data relevant to a target entity identified by a number string, said method comprising the steps of:
a) storing in a domain-name-system, DNS, type of database system, records each associated with a corresponding domain name and holding an Uniform Resource Identifier, URI, for locating communications data associated with the domain name, each said domain name being related to a respective number string from which it can be derived by a process including parsing at least a substantial portion of the number string into at least a part of said domain name;
b) applying said process to the said number string identifying the target entity whereby to form the related domain name;
c) supplying the domain name formed in step b) to the DNS-type database system to retrieve the URI held in the corresponding said record; and
d) using the URI retrieved in step c) to access said communication data.

According to another aspect of the present invention, there is provided a computer program product intended for use with a computing resource having connectivity to a computer network, to enable access to remotely-stored communications data concerning a target entity; the computer program product being arranged to provide the computing resource, when executing the computer program, with:
- first means for forming, from a number string identifying the target entity, a domain name by a process including parsing at least a substantial portion of the number string into at least a part of said domain name;
- second means operative to use the network connectivity of the computing resource to supply said domain name to a domain-name-system, DNS, type of database system and to receive back a resource record including an Uniform Resource Identifier, URI, for locating communications data associated with the domain name; and
- third means for using said URI to access said communications data.

According to a further aspect of the present invention, there is provided a server of a domain-name-system, DNS, type of distributed database system, the server holding at least one resource record that provides a mapping from a domain name associated with the record to an Uniform Resource Identifier, URI, that is held in the record and is usable for locating communications data for contacting a target entity (B), at least a substantial portion of the domain name being in the form of a number string, identifying the target entity (B), that has been parsed into plural domain-name labels to be supplied to the DNS-type distributed database system for retrieval of the URI held in the corresponding record.

Advantageously, the DNS-type distributed database system in the foregoing three paragraphs is the domain name system of the Internet.

### Brief Description of the Drawings

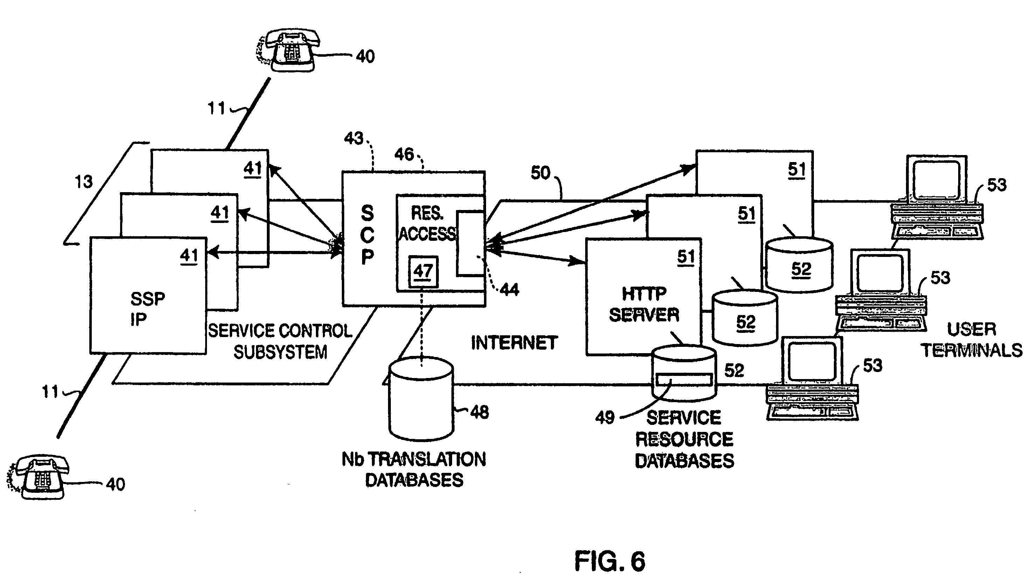

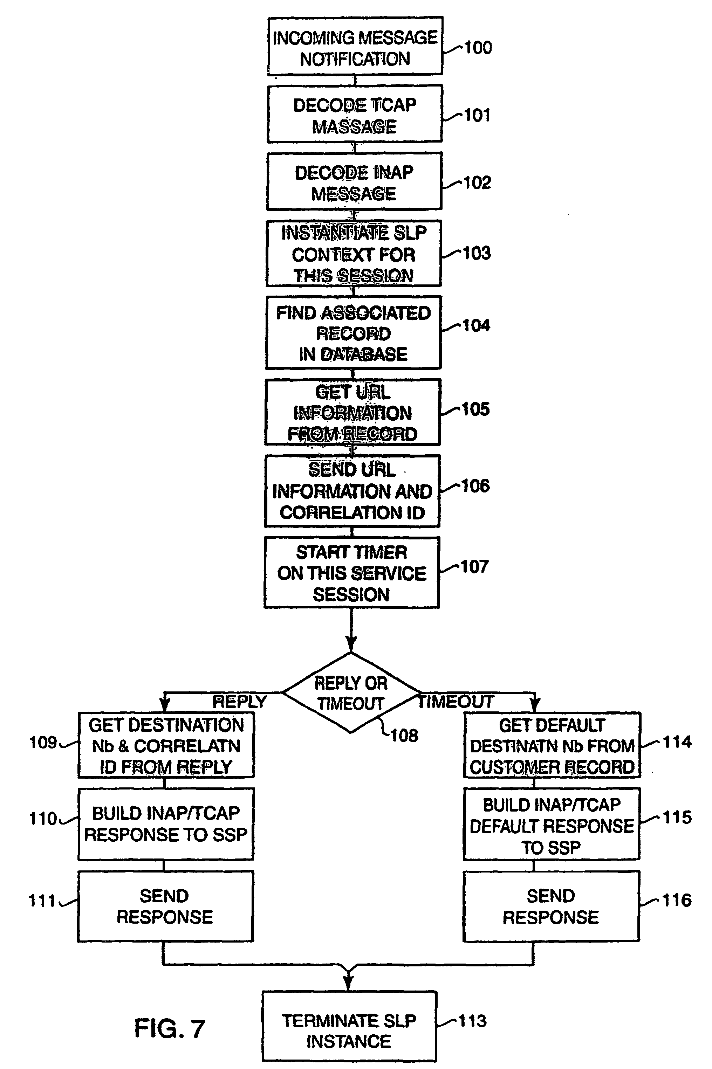

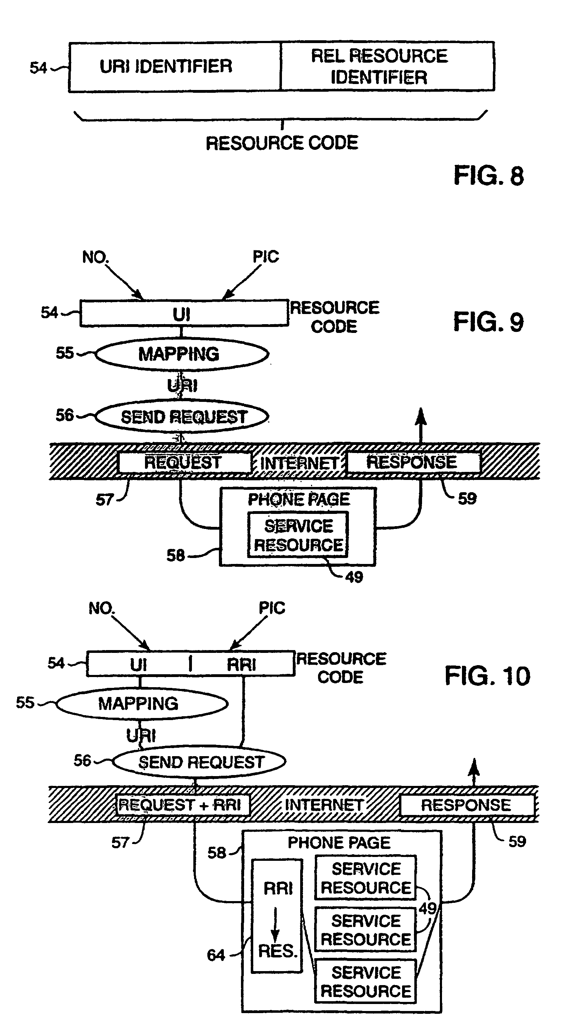

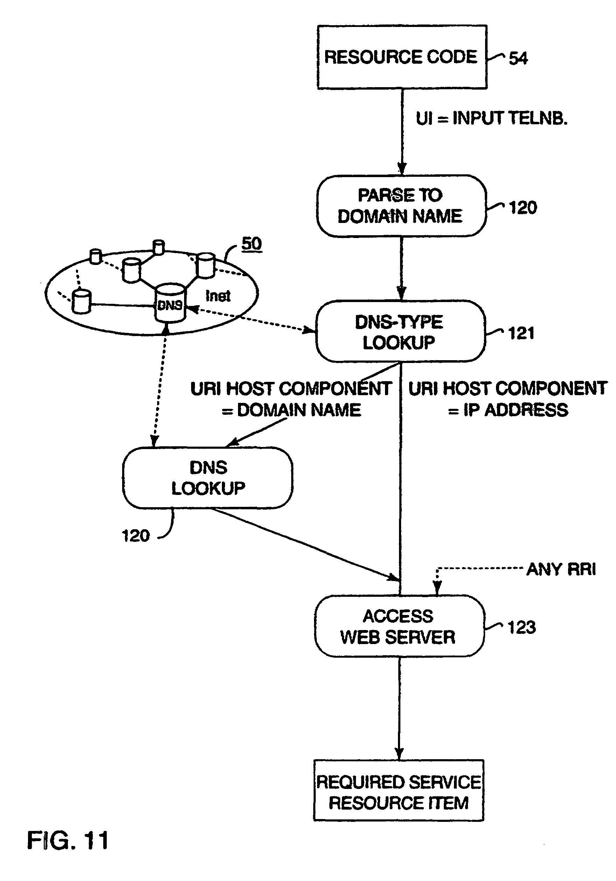

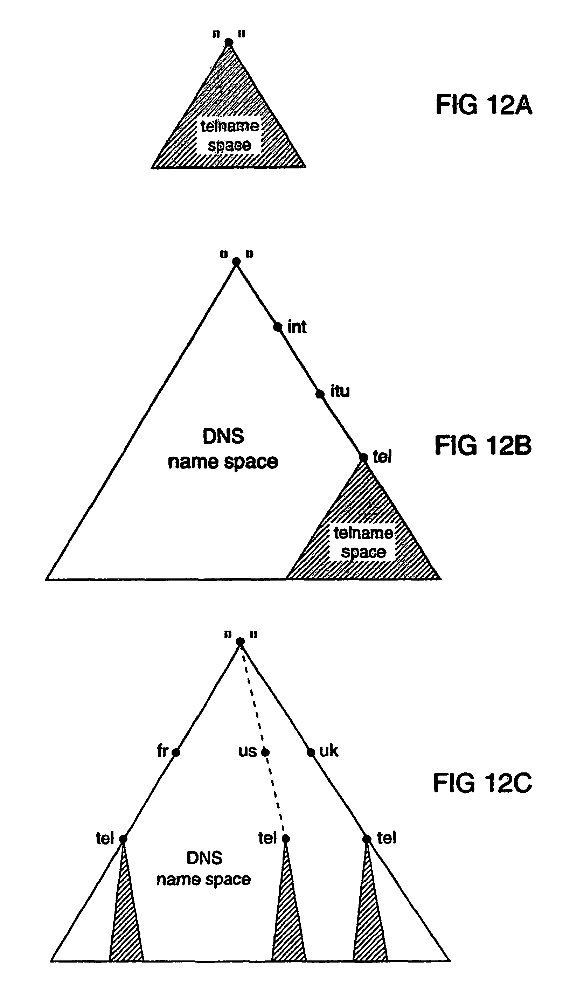

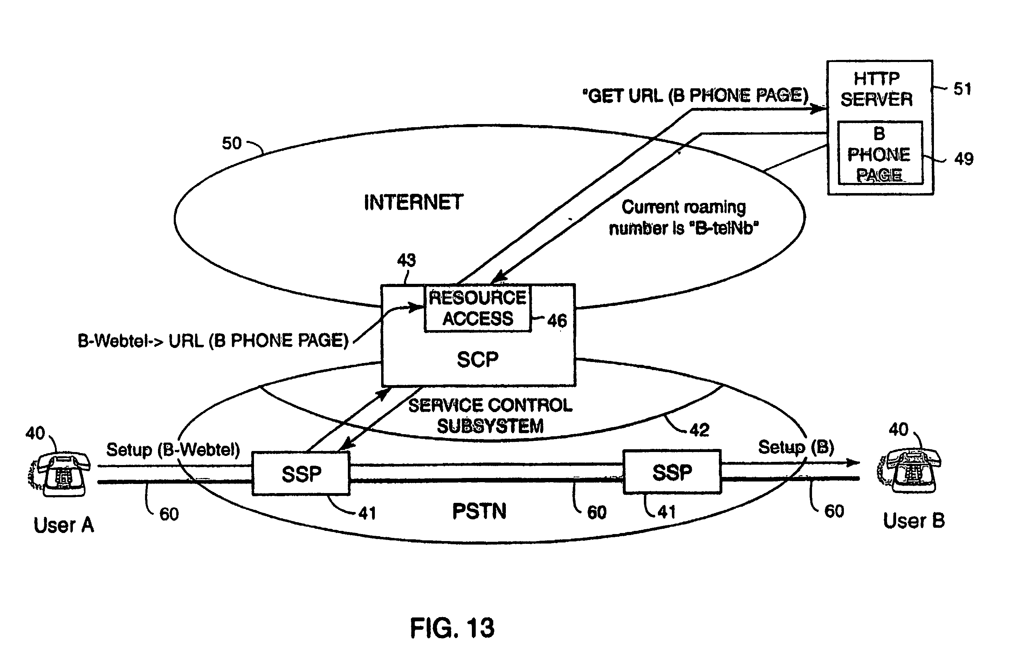

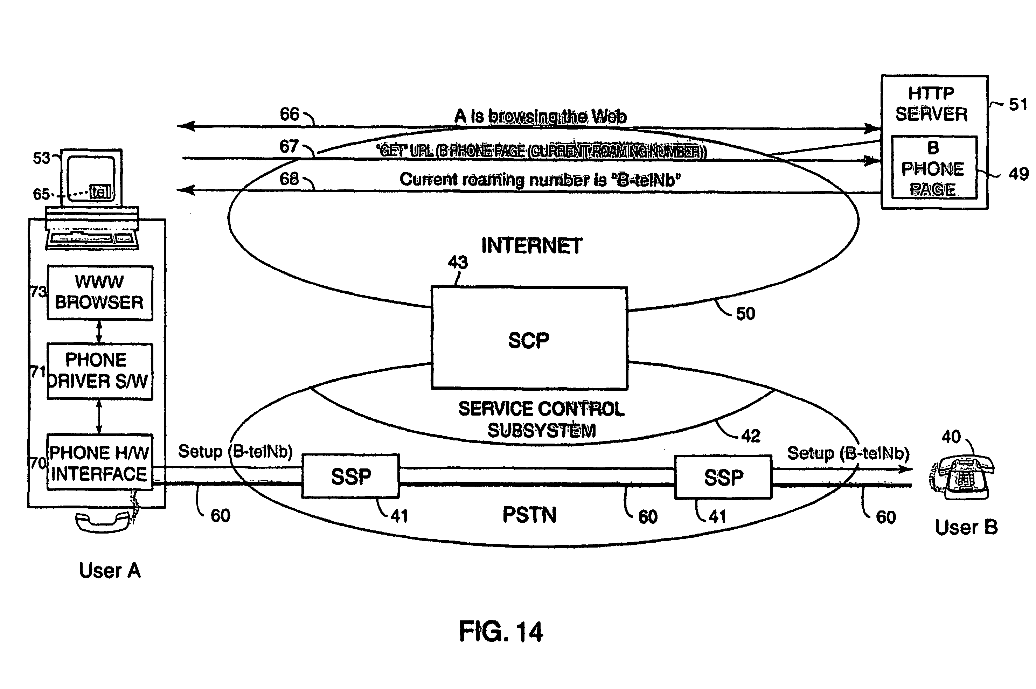

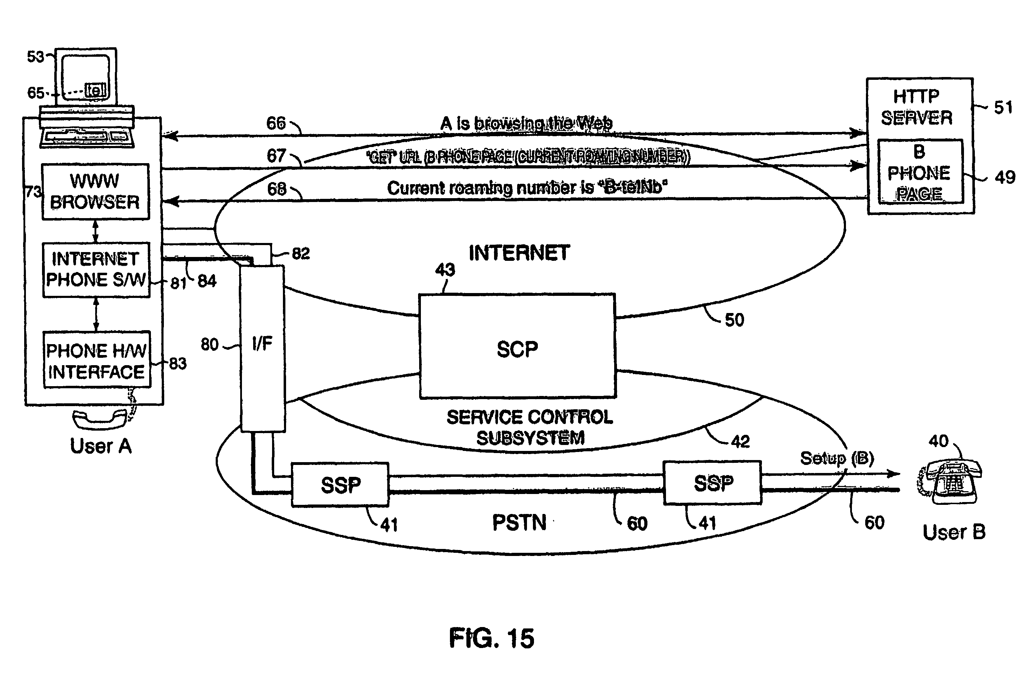

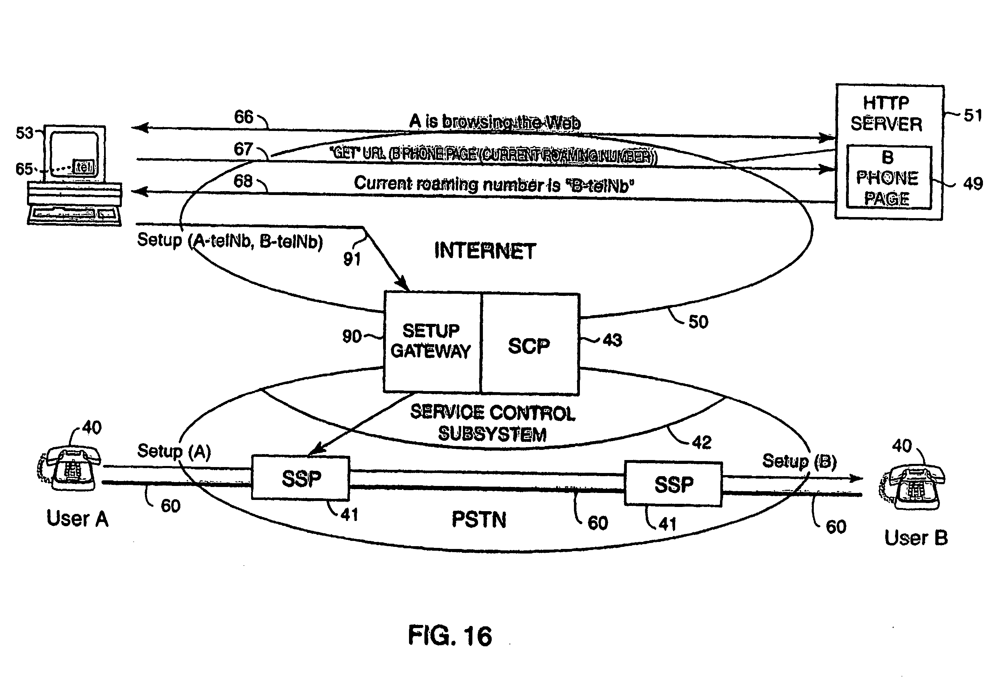

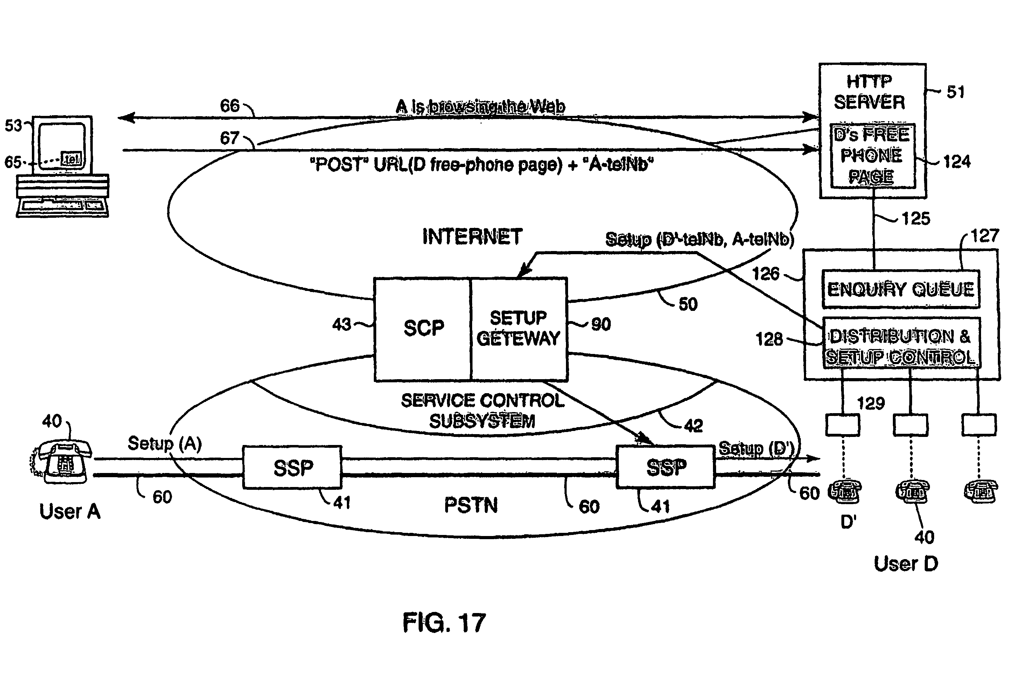

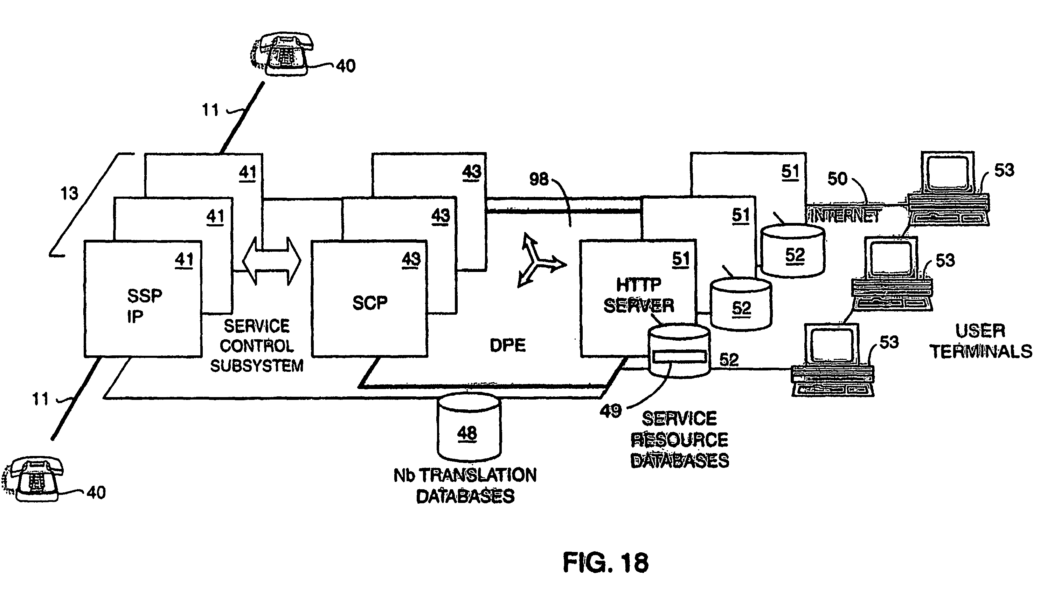

Embodiments of the present invention will now be described, by way of non-limiting example, with reference to the accompanying diagrammatic drawings, in which:
- **.Figure 1**: is a simplified diagram of a standard PSTN;
- **.Figure 2**: is a simplified diagram of a known PSTN with IN service capability;
- **.Figure 3**: is a diagram illustrating host domain name resolution by the DNS of the Internet;
- **.Figure 4**: is a diagram illustrating the functioning of the World Wide Web;
- **.Figure 5**: is a diagram illustrating the format of a standard URL;
- **.Figure 6**: is a diagram of a first arrangement in which service resource items are held on HTTP servers accessible both by the service control subsystem of a PSTN and by Web users;
- **.Figure 7**: is a diagram illustrating the processing of a service request by the SCP of Figure 6;
- **.Figure 8**: is a diagram illustrating the format of a resource code used by the Figure 6 SCP when accessing a service resource item;
- **.Figure 9**: is a diagram illustrating the process of accessing a service resource in the case where the service code does not include an RRI part;
- **.Figure 10**: is a diagram illustrating the process of accessing a service resource in the case where the service code includes an RRI part;
- **.Figure 11**: is a diagram illustrating the derivation of the URI of a service resource by parsing an input telephone number in accordance with the present invetion;
- **.Figure 12A**: is a diagram depicting a name space (the "telname space") constituted by the domain names derived by a parsing of a predetermined set of telephone numbers;
- **.Figure 12B**: is a diagram depicting the incorporation of the telname space without fragmentation into the DNS;
- **.Figure 12C**: is a diagram depicting the incorporation of the telname space in fragmented form into the DNS;
- **.Figure 13**: is a diagram illustrating the overall operation of the Figure 6 arrangement in providing a roaming number service in response to a telephone number being dialled at a standard phone;
- **.Figure 14**: is a diagram illustrating the overall operation of the Figure 6 arrangement when utilised by a Web user in setting up a call through a telephone interface integrated into the user's Web terminal;
- **.Figure 15**: is a diagram illustrating the overall operation of an arrangement in which an interface is provided between the PSTN and the Internet for telephone traffic;
- **.Figure 16**: is a diagram illustrating the overall operation of an arrangement in which a call setup gateway is provided between the Internet and the PSTN;
- **.Figure 17**: is a diagram illustrating the overall operation of an arrangement in which a freephone service is implemented for Web users; and
- **.Figure 18**: is a diagram similar to Figure 6 illustrating the provision of a distributed processing environment for interconnecting elements of the service control subsystem of the PSTN.

### Best Mode of Carrying Out the Invention

Figure 6 illustrates an arrangement for the provision of services in a PSTN conventionally comprising an inter-exchange network 13 (including trunks and switches at least some of which are SSPs 41 with associated IPs), an access network 11 connecting customer permise equipment (here shown as telephones 40) to the network 13, and a service control subsystem 42 including at least one SCP for providing services to the SSPs 41 upon request. It will be appreciated that the Figure 6 representation of a PSTN is highly diagrammatic.

The SCP 43 may operate in a conventional manner responding to service requests from SSPs 41 to run specific service logic on particular data according to information contained in the service request, and to send back to the requesting SSP appropriate instructions for effecting call set up. A service request is generated by the SSP in response to predetermined trigger conditions being met at a trigger check point, there being one or more such check points in the course of handling a call (it may be noted that where the trigger conditions have been downloaded to the SSP from the SCP then it could be said that the SSP is responding to an information request by the SCP when contacting the SCP upon the trigger conditions being met - however, in the present specification, this initial communication from the SSP to the SCP will be referred to as a "service request").

The SCP 43 is also provided with a network access interface 44 to the Internet 50 in order to make use of certain service resource items 49 (also referred to below simply as "service resources") during the course of processing at least certain service requests from the SSPs 41. These service resources 49 are held as WWW pages on HTTP servers 51 (more particularly, on service resource databases 52 of these servers 51). The WWW pages containing these service resources are referred to below as "phone" pages. The servers 51 are connected to the Internet and the phone pages are read accessible using respective URLs or URNs (for convenience, the more general term URI will be used hereinafter to mean the Internet-resolvable indicator of the location of a phone page).

The service resources may be service logic or service data and may be used by an otherwise standard service logic program running on the SCP, by accessing the phone page of the required resource using the appropriate URI. In certain cases, the service resources 49 may provide substantially all of the service control and data associated with a particular service. In this case, the service logic program running in the SCP 43 is of skeleton form, being instantiated on receipt of a service request and then serving to initiate service resources access and to return the results of this access to the entity that made the service request. In fact, according to this approach, the SCP could be implemented simply as a platform for fetching and executing phone-page service logic and would not need to have the complex provisioning and management systems for such logic as is required by standard SCP platforms; SCPs could then become more ubiquitous, possibly being associated with every SSP.

Figure 7 is a flow chart illustrating the progress of events in the case where the SCP 43 handles a service request by accessing a phone-page service resource. Upon receipt of a service request in an INAP message (step 100), SCP 43 decodes the TCAP/INAP message structure in standard manner (steps 101 and 102) well understood by persons skilled in the art. Next, SCP 43 instantiates a service logic program, SLP, to handle the request (step 103). This SLP is then responsible for looking up the URL of the required service resource as determined from information contained in the service request (steps 104, 105). For example, if the service request relates to a called-party service, then the required resource will be indicated by the dialled number and the latter will be used to derive the URL of the resource. Once the URL of the desired service resource has been ascertained, a resource request (for example, in the form of an HTTP request message) is sent over the Internet to the corresponding server holding the desired service resource (step 106); a correlation ID is also passed with the resource request to enable a response from the latter to be linked with the appropriate SLP instance. A timer is also started (step 107).

If a response is received from the accessed resource before the expiration of a time-out period (tested in step 108), then the response, which is usually in the form of a destination number, is supplied to the appropriate SLP as identified using the correlation ID passed with the response (step 109). An INAP/TCAP response message is then prepared and sent to the entity that made the original service request (steps 110 and 111) after which the SLP instance is terminated (113).

If in step 108, a time-out occurs before a response is received, then a default response value (generally a default destination number) may be looked up in the customer record and put in an INAP/TCAP message and sent back to the requesting entity (steps 114 to 116). The SLP instance is then terminated (113).

### Locating & Accessing Service Resources

The functionality associated with accessing a phone-page resource is schematically represented in Figure 6 by resource access block 46. Block 46 includes URI determination block 47 for determining the URI of the phone page containing the desired resource on the basis of parameters passed to block 46. Using the URI returned by block 47, the resource access block 46 then accesses the phone page of the required service resource 49 over the Internet through interface 44.

**Resource Codes -** It is possible that more than one service resource is associated with a particular telephone number; in this case the resource access block 46 will need to know additional information (such as current point-in-call, pic) to enable the appropriate service resource to be identified. If the service resources associated with a number are located on different phone pages, then the additional information is also passed to the URI determination block 47 to enable it to return the URI of the appropriate phone page. It is also possible for all the service resources associated with a number to be located on the same phone page. In this case, the resource access block 46 uses the additional information to pass a resource-identifying parameter with its access request to the phone page concerned; it is then up to the functionality associated with the phone page to access the correct service resource.

Thus, each service resource can be considered as being identified by a respective resource code 54 (see Figure 8) made up of a first part UI ("URI Identifier") used to identify the URI at which the resource is located on the Internet, and a second part RRI ("Relative Resource Identifier") used to identify the resource amongst plural resources at the same URI.

**Resource Access -** Where only one service resource 49 is located on a phone page 58 identified by a unique URI, then the resource code 54 simply comprises the UI, generally either a telephone number alone or a telephone number plus a pic parameter (see Figure 9). In this case, accessing a resource simply involves mapping the whole resource code 54 into the corresponding URI (process 55) and then sending a request 57 to the corresponding phone page 58, this latter itself constituting the desired service resource 49. The result of accessing resource 49 is then returned in response message 59.

In contrast, where multiple service resources 49 are located on the same phone page 58 (Figure 10), the resource code 54 comprises both a UI and RRI, the UI generally being a telephone number and the RRI a pic or other parameter for distinguishing between the co-located resources. In this case, accessing a resource involves mapping the UI part of the resource code 54 into the corresponding URI (process 55) and then sending a request 57 to the corresponding phone page (process 56), the request including the RRI of the resource code. The phone page 58 includes functionality 64 for accessing the required resource on the basis of the RRI in the request message. The result of accessing the required resource 49 is then returned in response message 59.

An alternative to the Figure 10 method of accessing a service resouce that is co-located with other resources on a phone page, would be to retrieve the whole page across the Internet simply using the URI derived from the UI part of the resource code, and then to extract the desired resource on the basis of the RRI.

**URI Determination from Resource Code -** The implementation of the URI determination block 47 that performs process 55 will next be considered. An hierarchically-structured distributed database system, similar to (or even part of) the Domain Name System (DNS) of the Internet, is provided in order to resolve the UI part of a resource code to a corresponding URI. This approach, which will be described in more detail below, would typically involve databases maintained by each PSTN operator for its numbers with which URIs are associated. These databases would be accessible by all PSTNs through a network such as the Internet with resolution requests being pointed to the appropriate database in a manner similar to the Domain Name System. In this case, the block 47 is constituted by an appropriate resolution program arranged to request UI resolution over the Internet through interface 44.

The host component of the URI may be provided either in the form of a host domain name or a host IP address. Where the host is identified by a domain name, then a further resolution of URI host name to IP address will subsequently be carried out in standard manner by interface 44 using the Domain Name System of the Internet. This further resolution can be avoided if the host identity is directly provided as an IP address.

A more detailed consideration will now be given of the DNS-type lookup implementation for the URI determination block 47 for the case where the UI part of the resource code is a telephone number and there are no constraints on the URI, thereby requiring both the full host and path components of the URI to be returned by the lookup. A key part of the overall process is the formation of the equivalent of a host domain name from the telephone number of interest; this domain-name equivalent is then resolved into a corresponding URI by a lookup mechanism which in the present example is identical to that employed by the DNS (indeed, the lookup mechanism may be incorporated into the DNS though it can also be independently implemented).

The nature of the DNS has already been described above with reference to Figure 3 when the term "DNS-type" system was also introduced. For convenience in the following a DNS-type system organised to provide a telephone number to URI translation facility will be referred to as a "Duris" system (standing for "DNS-type URI Server" system).

The basic principles surrounding operation of a Duris system are:
- every telephone number can be turned into a host domain name (the name space containing such host domain names for the telephone numbers of interest is referred to below as the "telname space"); and
- for every host domain name in the host domain space there is a Registration Record held by the Duris system containing the corresponding URI.
Thus, an input telephone number forming, in the present case, the UI part of a resource code 54 (see Figure 11), is first parsed to form a domain name (step 120) and then passed to the Duris system (illustrated in Figure 11 as formed by the DNS itself) to retrieve the RR with the corresponding URI (step 121). Following on from the URI lookup, if the URI returned has its host component as a domain name, the DNS is next used to derive the host IP address (step 122); this step is, of course not needed if the host component is stored as an IP address in the RR. The URI is then used to make a resource request to the appropriate server, passing any RRI part of the resource code 54 (step 123).

There are a number of possibilities at the top level as to how a Duris system could be implemented:
(a) Independent of the DNS. In this option, the telname space constitutes the entire name space to be managed with the root of the telname space being the "." name space root (see Figure 12A where the telname space is shown hatched). In this case, the Duris system is independent of the DNS itself. The Duris system could, of course, use the same basic infrastructure as the DNS (that is, the Internet) or an entirely separate network. Where the telname space comprises all the domain names corresponding to all public telephone numbers worldwide, parsing a full international telephone number would give a fully qualified domain name. Of course, the telname space could be a much smaller set of names such as those derived from internal extension numbers within a company having worldwide operations.
(b) Unfragmented Telname Space within the DNS. In this option, the telname space is a domain of the DNS name space and the Duris system is provided by the DNS itself. Thus, where the telname space comprises all domain names derived from public telephone numbers worldwide, the telname space could be placed within the domain of the ITU, in a special subdomain "tel", the root of the telname space then being "tel.itu.int." (see Figure 12B where again, the hatched area represents the telname space). The responsability for administering the domain "tel.itu.int." would then lie with the ITU. With this latter example, to form a fully qualified domain name from an input telephone number, after the number has been parsed to form the part of the domain name corresponding to the structuring within the telname space, the tail "tel.itu.int." is added. The fully qualified domain name is then applied to the DNS and the corresponding RR record, holding the required URI, is retrieved. As a further example, the telname space could be all name derived from internal extension numbers within Hewlett-Packard in which case the root of the telname space would be "tel.hp.com." and Hewlett-Packard would be entirely responsible for managing this domain.
(c) Fragmented Telname Space within the DNS. In this option, the telname space is split between multiple domains of the DNS name space and the Duris system is provided by the DNS itself. Thus where the telname space comprises all domain names derived from public telephone numbers worldwide, the telname space could be split between respective "tel" subdomains of each country domain; thus, as illustrated in Figure 12C, the part of the telname space corresponding to French telephone numbers would have a root of "tel.fr." and the part of the telname space corresponding to UK telephone numbers would have a root of "tel.uk.". The responsability for administering each "tel" subdomain would then lie with each country. With this latter example, to form a fully qualified domain name from an input telephone number, the part of the telephone number following the country code is parsed to form the part of the domain name within a country 'tel' subdomain and then a host domain name tail is added appropriate for the country concerned. Thus for a French telephone number, the "33" country code is stripped from the number prior to parsing and used to add a tail of "tel.fr.". The tail appropriate to each country can be stored in a local lookup table. As a further example, two commercial organisations (X company and Y company) with respective DNS domains of "xco.com." and "yco.com." may agree to operate a common Duris system with a telname space split between "tel.xco.com." and "tel.yco.com". In this case, any Y company telephone number input from X company will be parsed to a fully qualified domain name terminating "tel.yco.com." and vice versa.

Consideration will next be given to the parsing of a telephone number into a domain name - in other words, where to insert the "." characters into the number to provide the structuring of a domain name. Of course, as already explained, telephone numbers are hierarchically structured according to each country's numbering plan. Thus one approach would be to follow this numbering plan structuring in dividing up a telephone number to form a domain name. By way of example, the telephone number "441447456987" which is a UK number (country code "44") with a four digit area code ("1447") and six digit local number ("456987") could be divided to form a domain name of 456987.1447.44 (note that the reversal of label order occassioned by the fact that the DNS labels are arranged least significant first). If the telname space is a subdomain of the DNS with a placement as illustrated in Figure 12B, the fully qualified domain name derived from the telephone number would be:
456987.1447.44.tel.itu.int.

There are however, difficulties inherent with trying to match the numbering plan hierarchy when parsing a telephone number into a host name. Firstly, in order to parse an international number correctly, it would be necessary for each entity tasked with this operation to know the structuring of each country's numbering plan and where, as in the UK, area codes may be of differing length the required knowledge may need to take the form of a lookup table. Whilst this is not a complicated computational task, it is a major administrative nuisance as it means that each country will need to inform all others about its numbering plan and any updates. The second problem is that a six or seven digit local number is a very large domain; it would be preferable to create subdomains for performance and scaling reasons but there is no obvious way of doing this.

These problems can be overcome by giving up the restriction that the parsing of telephone number into a domain name should match the structuring of national numbering plans. In fact, there is no strong reason to follow such a scheme as DNS servers know nothing about the meaning of the name space. It is therefore possible to parse telephone numbers using a deterministic algorithm taking, for example, 4 digits at a time to limit the size of each subdomain and making it possible to 'insert the dots' without knowing the numbering plan concerned. So long as the DNS domains and zones served by the DNS servers are created correctly it will all work.

For international numbers it would still seem appropriate to separate off the country codes and so a hybrid parsing scheme would be to parse the initial part of a dialled number according to known country codes and thereafter use a deterministic scheme (for example 3,7 or 4,6 or 3,3,4) to separate the digits. Of course, if a fragmented telname space is being used as illustrated in Figure UC then the country code is used to look up the host name tail and it is only the national part of the number which would be parsed.

Finally, as regards the details of how a DNS server can be set up to hold RR records with URIs, reference can be made, for example, to "DNS and BIND", Paul Albitz and Criket Liu, O'Reilly & Associates, 1992 which describes how to set up a DNS server using the Unix BIND implementation. The type of the RR records is, for example, text.

It should be noted that DNS labels should not in theory start with a digit. If this convention is retained, then it is of course a trivial exercise when parsing a telephone number to insert a standard character as the first character of each label. Thus, a 4 digit label of 2826 would become "t2826" where "t" is used as the standard starting character.

It will be appreciated that as with domain names, where an input telephone number is not the full number (for example, a local call does not require any international or area code prefix), it would be parsed into a domain name in the local domain.

The foregoing discussion of Duris system implementation, has been in terms of translating a telephone number into an URI where the telephone number forms the full UI of a resource code and the Duris system returns a full URI. It will be appreciated that the described Duris implementation can be readily adapted to accommodate the various modification discussed above regarding the form of the UI and what parts of the URI need to be looked up. For example, where there are a number of differents service resources associated with a subscriber each in its own file and the required source is identified by a pic part of the resource code, then the input telephone number will be used to look up, not the full URI, but the host component and that part of the path component up to the relevant subdirectory, the pic part of the UI then being appended to identify the required resource file.

For small local Duris implementations, it may be possible to have a single server; the implementation should still, however, be considered as of a DNS type provided the other relevant features are present.

### Nature of Service Resources

Turning now to a consideration of the service resources 49, how these service resources can be provisioned onto the servers 51 will be described more fully below but, by way of present example, the service resource or resources associated with a particular PSTN user (individual or organisation, whether a calling or called party) can be placed on a server 51 over the Internet from a user terminal 53 in one or more WWW pages.

Consider the simple case where the service resource is a service data item such as a telephone number (for example, an alternative number to be tried if the user's telephone corresponding to the number dialled by a calling party is busy). This diversion number could be made the sole service resource of a phone page of the user. The phone page URI could be a URL with scheme set to HTTP in which case the GET method could be used to retrieve the diversion number. Such an arrangement is suitable if the phone page is only to be used for functional retrieval of the diversion number. However, if the diversion number is to be visually presented at a user terminal 53, then it may be desirable to accompany the number with explanatory material (this will often not be necessary as the diversion number can be arranged to be returned into an existing displayed page that already provides context information). However, where the phone page does include explanatory material as well as the diversion number, an entity only wishing to make functional use of the phone page, could be arranged to retrieve the phone page and then extract the diversion number (this would, of course, require a standard way of identifying the information to be extracted from the phone page).

An alternative and preferred arrangement for providing for both viewing and functional access to a resource requiring explanatory material for viewing, is to use an object-oriented approach to resource design. In this case, the resource object would have two different access methods associated with it, one for purely functional use of the resource and the other enabling viewing of associated explanatory material. It would then be up to the accessing entity to access the resource object using the appropriate object method.

Yet another arrangement for providing for both viewing and functional use of the diversion number, would be to provide separate resources appropriately configured for each use, each resource having its own resource code (generally, both such resources would be placed on the same phone page and in this case the UI part of each resource code would be the same).

Retrieval of a phone page for use by a human user will generally not be as time critical as retrieval for operational use by a PSTN. Thus, while for human use the scheme specified in the URL of a service resource could be HTTP, it may be advantageous for operational use to define a special "phone" scheme (access protocol) which would result in the server 51 using an optimised access routine to access the required resource (diversion number, in the current example) and respond to the accessing entity in the minimum possible time.

Besides data items, other possible types of service resource include service logic for execution in place (at the server) with the result of this execution being returned to the entity accessing the resource; service logic downloadable from the server to the accessing entity for execution at that entity; and a logging resource for logging information passed to it by the accessing entity (or simply for logging the fact that is has been accessed). It will be appreciated that the logging resource is really just a particular case of service logic executable in place.

By way of example, a service resource constituted by execute-in-place service logic can be arranged to implement time-of-day routing, the result of executing the service logic being the telephone number to which a call should be routed taking account of the time of day at the called party's location. An example of a service resource constituted by downloadable service logic is service logic for controlling calling-party option interrogation using the facilities provided by an IP. As regards the logging resource, this can be used for recording the number of calls placed to a particular number.

Where each resource has its own phone page and the resource is present only in its unembellished functional form, then the HTTP scheme can be employed for access using the GET method for both the downloadable service logic and the execution-in-place service logic, and the POST method for the logging resource. If it is desired to provide an explanatory material with each service resource, then any of the solutions discussed above in relation to data items, can be used.

Where more than one service resource is to be associated with a number, then each such resource can be placed on a respective phone page with its own URI. However, the preferred approach is to place all such service resources on the same page and use the RRI part of the corresponding resource codes to enable access to the appropriate resource. The accessed resource is then treated according to its form (executed if execute-in-place service logic, returned if downloadable service data or logic).

Thus if both a diversion-number service-data resource and a time-of-day execution-in-place service-logic resource are placed on the same phone page, the diversion-number resource code might have an RRI of "1" whilst the time-of day resource code might have an RRI value of "2".

Where calling/called party options are to be included in a service resource for presentation to such party, then as already indicated, this can conveniently be done by constituting the service resource as downloadable service logic with the chosen option possibly initiating request for a follow-up service resource.

It will be appreciated that a service resource will often be of a complex type, combining service data and/or downloadable service logic and/or execute in place service logic. A particularly powerful combination is the of the two types of service logic where the downloadable service logic is designed to interact with execute-in-place service logic; using this arrangement, the user can be presented with complex client-server type applications.

### Example Usage of Service Resource

Figure 13 illustrates the operation of a service making use of a resource on a server 51. This service is equivalent to a "personal number" service by which a user can be accessed through a single, unchanging number even when moving between telephones having different real numbers. To achieve this, the user requiring this service (user B in the current example) is allotted a unique personal number (here referred to as the "Webtel" number of B) from a set of numbers all of which have the same leading number string to enable an SSP to readily identify a dialled number as a Webtel number. User B has a service resource 49 on a dedicated phone page on HTTP server 51, this phone page being located at a URL here identified as "URL (B phone page)". B's phone page when accessed returns the current roaming number (" B-telNb") where B can be reached. In the simplest case, B's phone page is just a single number that can be modified by B (for example, from a terminal 53) as B moves to a different phone. More likely is that B's phone page is an execute-in-place service logic providing time of day routing.

In the present example, the association between B's Webtel number and the URL of B's phone page is stored in an association table accessible to SCP 43.

Upon a user A seeking to contact user B by dialling the Webtel number of B, the telephone 40 being used by A passes a call set up request to SSP 41 (note that in Figure 13 the bearer paths through the telephony network are shown by the thicker lines 60, the other heavy lines indicating signalling flows). SSP 41 detects the dialled number as a Webtel number and sends a service request to SCP 43 together with B's Webtel number. SCP 43 on receiving this service request initiates a service logic program for controlling translation of B's Webtel number into a current roaming number for B; in fact, in the present case, this program simply requests the resource access block 46 to access the service resource identified by B's Webtel number, (that is, B's phone page 49) and return the result of this access. To this end, block 46 first translates B's Webtel number into the URL of B's phone page and then uses this URL to access B's phone page over the Internet (for example, using the 'phone' scheme already referred to with a method corresponding to the HTTP GET method). This results in B's current roaming number B-telNb being passed back to block 46 and in due course this number is returned to the SSP 41 which then initiates completion of call set up to the telephone 40 corresponding to B-telNb.

The Figure 13 example related to a called-party service; it will, of course, be appreciated that the principle of accessing service resources over the Internet can be applied to all types of services, including both calling-party and called-party services and hybrids. Thus, standard 800 number services can be implemented with the dialled 800 number resulting in access to a phone page resource constituted by execute-in-place service logic that returns the most appropriate number for controlling onward call routing.

It will be appreciated that although in the Figure 13 example the service request from the SSP was triggered by a leading number string of a dialled number, a service request may be triggered by a variety of triggers including calling-party number, called-party number, or some other user input, such triggers being possibly qualified by call setup progress (for example, called-party number qualified by a busy status or by ringing for more than a certain time).

With respect to the logging service resource mentioned above, one possible application for such a resource is in telephone voting. In this case, dialling the voting number causes the SSP picking up the call to pass a service request to SCP 43 which then contacts the appropriate logging resource over the Internet to register a vote after which the call is terminated. To minimise bottlenecks, a logging resource could be provided at a different URL for each SCP, it being a simple matter to collect and collate voting from all these logging resources over the Internet. If an SCP with Internet access is provided at every SSP, then the risk of congestion is greatly reduced.

As already noted, a user's phone page may hold multiple service resources in which case the access request from the accessing SCP needs to contain an appropriate RRI identifying the required resource.

In the event that an SCP is to provide both a traditional IN service to some users and an equivalent service using an Internet-accessed service resource to other users, then a lookup table may need to be provided in the SCP to ensure that a service request is appropriately handled; such a lookup table can conveniently be combined with the customer record database.

Once a user, such as user B, has set up one or more phone pages specifying his desired service resources (particularly service logic defining personalised services), it is clearly logical for user B to want any PSTN operator he cares to use, to access and utilise such service resources. This is possible if the Webtel-to-URI databases are available to all operators. Thus multiple operators could be set to access B's phone page or pages. If an operator declines to use B's phone pages, B can obviously chose not to use that operator (at least where that operator provides a long haul carrier service subject to user selection). The possibility therefore arises that service provision will cease to command a premium from operators, but that the provision of phone-page utilisation by an operator will become a necessary basic feature of PSTN operation.

### Provisioning and Updating Service Resources

Consideration will next be given as to how the service resources 49 are provisioned to the servers 51 and subsequently updated.

So far as provisioning is concerned, two basic actions are required: firstly, the service resource must be placed on a server 51 and, secondly, the URI of the service resource must be notified to the PSTN operator along with the trigger conditions (number plus any other condition such as point in call) calling for access to the resource; if multiple resources are provided at the same URI, then the RRI values needed to retrieve the appropriate resource for a particular trigger condition, must also be notified. This notification process will be referred to hereinafter as 'registering' the service resource with the PSTN operator; registration is, of course, necessary to enable the association tables used by SCP 43 to be set up and for trigger conditions to be set in SSPs 43. For certain services, such as that described above with reference to Figure 13, it is not the user that supplies the triggering number (the Webtel number in the Figure 13 example); instead, the PSTN operator allocates an appropriate number to the user as part of the registration process.

As to the process of placing a service resource on a server 51, how this is carried out will depend on the attitude of the PSTN operator to the possible effects of such service resources on operation of the PSTN. Where the service resource simply returns a data item to an accessing entity, then an operator may not be too concerned about possible errors (accidental or deliberate) in implementing the service resource. However, the operator will probably be much more concerned about the proper operation of any service logic that may be returned by a resource; indeed, an operator may not permit such a service resource.

Assuming for the moment that an operator has no concerns about the nature or implementation of service resources, then how a resource is placed on a server 51 will largely depend on the nature of the server concerned. For example, if a user has a computer with network access to the Internet and this computer is used as server 51, then the user can simply load a desired resource onto the server as a WWW phone page for external access. A similar situation arises if the server is an organisation server to which the server has access over an internal LAN. In both these latter cases, loading the resource as a WWW phone page does not itself require Internet access. However, if the server 51 is one run by an external Internet service provider, then a user can arrange to download the required service resource into the user's allocated Web site space on the server; this may or may not involve Internet access. One special case of this latter scenario is where the PSTN operator provides a special server for user phone pages containing service resources.

Except where a user's own computer acts as server 51, placing a service resource on a server will generally involve clearing one or more levels of password protection.

As regards the origin of the service resource loaded by a user onto server 51, this may be generated by the user or, particularly where the resource includes service logic, may be provided by a third party (including the PSTN operator).

If the PSTN operator wishes to have control over the service resources 49 to avoid any adverse effects on operation of the PSTN, two approaches are possible. Firstly, the operator could require that every resource (or, possibly, a particular subset) had to be subject to a verification process before use, appropriate measures then being taken to avoid subsequent alteration of the resource by the user (except, possibly, for particular data items); in this respect, the operator could require that the resource be placed on a server under the operator's control and to which the user had no write access (except possibly for altering particular data items, as indicated above). A second, more attractive, approach to minimising adverse effects by the service resources 49, is for the operator to provide standard service resources to which a user could add the user's own data (and possibly make limited functional selections in case where the resource included service logic); the customised resource would then be loaded onto a server 51 controlled by the operator. This process can be conveniently implemented for a particular resource using an HTML "form" which a user could download over the WWW from the operator-controlled server. After completing the form and activating a 'commit' graphical button of the form, the entered information would be 'posted' back to the server where the information would be used to produce a customised service resource thereafter placed on the server for access over the Internet. An advantage of this approach is that registration of the service resource with the operator is simultaneaously effected. (It may be noted that if registration needs to be done as a separate act from having a service resource loaded on a server, then using an HTML form is a very convenient way to implement the registration process).

From the foregoing it can be seen that whilst the provisioning process does not necessarily require information to be passed over the Internet, in many cases this will be the best solution, particularly if an HTML form exchanged over the WWW can be used to produce a customised service resource. It should be noted that producing a customised service resource using an HTML form is not limited to cases where the PSTN operator controls the server.

As regards updating service resources, there is likely to be a need to update certain data items on a fairly frequent basis (for example, roaming number). Where the PSTN operator does not place any controls on the service resources 49, then update is a relatively simple matter, only requiring write access to the server concerned (as already indicated, this will generally involve one or more levels of password protection). However, where the PSTN operator exercises control over the service resources, for example by only permitting customisations of standard service resources, such customised resources being loaded on servers controlled by the operator), then write access to the service resource may be tightly controlled. Again, an HTML form may conveniently be used as the medium for modifying a data item in such cases; to the operator, this has the benefit of limiting the modifications possible whilst to the user, a form interface should provide a simple route to resource modification.

For more complex updates, it may be necessary to go through a process similar to that required for initial provisioning.

Particularly where the service resources are held on a server 51 controlled by the PSTN operator, resource update will generally involve communication over the Internet.

### Web User Interaction

Consideration will next be given to other possible uses of the service resources held in phone pages on the servers 51. For example, if user B's phone page contains a diversion number, then provided this phone page is read-accessible over the Internet from user A's terminal 53, user A can use a graphical Web browser running on terminal 53 to view B's phone page and discover B's diversion number. As earlier discussed, the diversion number may be passed to user A for display in an existing visual context giving meaning to the number, or may be passed to user A with accompanying explanatory text.

A more useful example is a current roaming number service for user B. Suppose B's phone page 49 on server 51 (see Figure 14) is operative when accessed to return a current roaming number where B can be reached. Further suppose that user B has a Web site with several Web pages written in HTML and each page contains a graphical 'phone' button which when activated uses the GET method to access B's phone page by its URL. Now if user A whilst browsing (arrow 66) B's Web site over the WWW from user A's terminal 53, decides that he would like to call user B to discuss some item of interest, user A simply activates the phone button 65 on the currently viewed page of B. This causes B's phone page to be accessed using the HTTP request "GET URL (B Phone Page)" - see arrow 67.

B's current number to be called is then determined and passed to user A's terminal 53 (see arrow 68) where it is displayed. An explanatory text concerning the number will generally also be displayed; for example the text "Please call me at the following number:" could be displayed, this text being provided either by the HTML script associated with the phone button, or from the phone page when returning the current number. In fact, it would probably be more helpful to provide user A, not only with the current number for reaching user B, but also with all numbers where B could be reached together with the times when B was most likely to be at each number. Since this extra information is likely to be subject to frequent change, the only sensible way to provide the information is from the phone page. Thus, B's phone page not only provides the current number for reaching B, but also a text that includes numbers and times subject to change; scripting B's phone page is, of course, done in a way that ensures that variable data need only be altered in one place.

In a further example, B's phone page might include downloadable service logic for execution at user A's terminal. This is useful where choices are to be presented to a user, each choice producing a follow-up action such as fetching a further phone page. For example, the first-accessed phone page may be a family phone page giving the general telephone number for a family but also giving the user the possibility of selecting further phone information on each family member, such as a time-of-day dependent number; in this case, each family member has their own follow-up phone page.

In the above scenarios, user A has been presented with a number to call over the PSTN. User A can now pick up his standard telephone and dial the number given. In fact, a complication arises if A only has Internet access via a SLIP/PPP connection over an ordinary, non-ISDN, PSTN line since, in this case, A's telephone line is already tied up with making Internet access when gateway 90 seeks to set up a call to A's telephone; with an ISDN connection, as two channels are available, this problem does not arise. One way of overcoming this problem would be to have user A's terminal 53, after obtaining the number to call from B's phone page, automatically suspend its Internet session by storing any required state information (for example, current WWW URL being accessed) and then terminate its SLIP/PPP connection to thereby free up the telephone line. A can then telephone B. At the end of this call, A can resume the suspended Internet session, using the stored state information to return to the point where A left off to call B. An alternative approach is to operate a suitable multiplexing modulation scheme on the telephone line to A allowing voice and data to be simultaneously carried. A number of such schemes already exist. The PSTN would then need to separate the combined data and voice streams coming from A at some point and pass each to its appropriate destination (the Internet data being forwarded to the ISP providing the SLIP/PPP connection for user A and the voice stream being passed to B); of course, data and voice traffic in the reverse direction would also need combining at some point for sending over the last leg to A's terminal.

Rather than A manually dialling B using a standard telephone, another possibility is that user A's terminal is provided with functionality enabling A to make a call over the PSTN from his terminal; this functionality generally comprises a hardware interface 70 (Figure 14) to a telephone line and phone driver software 71 for driving the interface 70 in response to input from application software such as the Web browser 73. A could call up his phone software and enter the required number or, preferably, A need only "select" on screen the number returned from B's phone page and then pass it into A's phone software. Indeed, provided user B knew the software interface to the software 71 providing dialling functionality on A's terminal, it would be possible for B's phone page to return to A's terminal program code for automatically dialling B's number upon A confirming that he wishes to proceed with call placement. As an alternative to placing a voice call, if A's terminal is equiped with a suitable modem and controlling software, A could, instead, elect to send a fax or data to B through the PSTN either to B's ordinary number or to one specified in B's phone page as the number to be used for such transmissions. Of course, placing a call from A's terminal over the PSTN may be subject to the problem already discussed of conflict for use of the telephone line where this is not an ISDN line and A gains Internet access via a SLIP/PPP connection.

However the call is placed, if B's telephone corresponding to the number tried by A is busy, a number of possibilities exist. Thus if B has a phone page that specifies a diversion number, and B has registered this service resource with the PSTN, then the diversion number should be automatically tried by the PSTN. However, if the diversion number resource has not been registered with the PSTN, a busy signal will returned to A. Where A has placed the call through a standard telephone, A must now decide how to proceed and A may elect either to give up or to refer again to B's phone page to look up the diversion number and redial using this number. If A placed the original call using his terminal 53 then the latter can be programmed to detect the return of a busy signal and then automatically look up B's diversion number and redial using this number. This functionality can be included in service logic downloaded from B's phone page and run on A's terminal.

If A had to terminate his Internet session in order to free up the telephone line for voice use, then referring back to B's phone page requires a new Internet session to be started (in fact, this inconvenience could be avoided if B's diversion number were passed to A's terminal at the time the original number to be dialled for B was supplied).

The service resource accessed on B's phone page upon B's telephone being busy may, of course, be more complex than just a diversion number. In particular, user A may be presented with a range of options including, for example, B's fax or voice mailbox number, the selection of an option potentially initiating the running of appropriate accessing software. Another possible option would be for A to leave B a call back message using a form downloaded from B's phone page upon this option being chosen; the completed form would be posted back to server 51 and logged for B to check in due course.

Of course, it may arise that user A wishes to access B's phone page to find out, for example, B's current roaming number, but user A does not know the URI of B's Web site and only has B's Webtel number. A could just call B through the PSTN in which case the translation of B's Webtel number to roaming number would be automatically effected (assuming B is still registered for this service); however, A may not wish to call B straight away, but just note his current roaming number. In order to solve A's problem, the Webtel-to-URI association tables previously described are preferably made accessible on the Internet at a known address (for example, at a known Web site). All that A need now do is to access this Web site passing B's Webtel number; B's phone page URI will then be returned to A who can then use it to access B's phone page. This process can, of course be made automatic from the point when A sends B's Webtel number to the association-table Web site.

### Internet/PSTN Call Interface

In the Figure 14 scenario, A's access to the PSTN was through a standard telephone interface even though the actual form of A's telephone differed from standard by being integrated into A's computer terminal 53. Figure 15 illustrates a situation where A, after being supplied with B's current roaming number as in the Figure 14 case, calls B via a route that starts out over the Internet and then passes through a user network interface 80 into the PSTN. Interface 80 is arranged to convert between ISDN-type telephone signalling on the PSTN and corresponding signalling indications carried across the Internet in IP packets; in addition, interface 80 transfers voice data from IP packets onto trunk 60 and vice versa.

Thus, upon A initiating a call to B, Internet phone software 81 in A's terminal sends call initiation signalling over the Internet to interface 80, the address of which is already known to A's terminal. At interface 80, the signalling is converted into ISDN-type signalling and passed to SSP 41. Call set up then proceeds in the normal way and return signalling is transferred back through interface 80, over the Internet, to the software 81 in A's terminal. This software passes call setup progress information to the WWW browser 73 for display to A. Upon the call becoming established, A can talk to B through his telephone and A's voice input is first digitised in phone hardware interface 83 and then inserted into IP packets by software 81 to traverse the Internet to interface 80 (see arrow 84); voice traffic from B follows the reverse path.

IN services can be provided to this call by SCP in response to a service request from an SSP 41. Thus, if B's phone is busy, and B is registered for call diversion, SCP 43 on receiving a service request will access B's appropriate phone page for call diversion and retrieve the diversion number. If SSP 41 is not set to initiate a service request on B's telephone being busy, the busy indication is returned to A's terminal where it can be handled in the manner already described with reference to Figure 14.

In fact, interface 80 can be provided with functionality similar to an SSP to set trigger conditions and generate a service request to SCP 43 on these conditions being satisfied.

### Third-Party Call Setup Gateway

Figure 16 illustrates a further arrangement by which A can call B after receiving B's current roaming number. In this case, a third-party call set-up gateway 90 is provided that interfaces both with the Internet 50 and with an SSP 41. Conveniently, gateway 90 can be co-located with SCP 43 (though this is not essential). Gateway 90 has the capability of commanding SSP 41 to set up a call between specified telephones.

Thus, upon A wishing to call B, a third-party call setup request is sent from A's terminal over the Internet to the gateway 90 (see arrow 91). This setup request includes A's telephone number and B's current roaming number. Gateway 90 first attempts to setup the call to A's telephone (which should generally succeed) and thereafter to set up the call to B's identified telephone. Once the call is setup, A and B communicate in standard manner across the PSTN.

If B's phone had been busy, then any of the previously described scenarios may ensue.

Gateway 90 can also be arranged to make service requests to SCP 43 upon predetermined trigger conditions being satisfied. Thus, gateway 90 might be set to pick up the busy condition on B's telephone and initiate a service request to SCP 43 for a diversion number. However passing the busy indication back to A's terminal via gateway 90 is preferred because of the flexibility it gives A regarding further action.

As already generally discussed in relation to Figure 14, a complication arises if A only has Internet access via a SLIP/PPP connection over an ordinary, non-ISDN, PSTN line since, in this case, A's telephone line is already tied up with making Internet access when gateway 90 seeks to set up a call to A's telephone. The solutions discussed in respect of Figure 14 (termination of Internet session; multiplexing voice and Internet data on same telephone line) can also be used here. An alternative approach both for Figure 14 and for Figure 16 scenarios is possible if user A's terminal can handle a voice call as digitised voice passed over the Internet. In this case, the voice call can be placed through an interface 80 of the Figure 15 form, and the voice traffic and the Internet communication with the B's phone page and/or gateway 90 are both carried in Internet packets passed over the SLIP/PPP connection to/from A's terminal 53 but as logically distinct flows passed to separate applications running on terminal 53.

It may be noted that the third party call setup request made by A's terminal to gateway 90 could equally have been made by service logic held in B's phone page and executed by server 51 (such an arrangement would, of course, require A's telephone number to be passed to B's phone-page service logic and this could be arranged to occur either automatically or through a form presented to user A at terminal A and then posted back to server 51).

It may also be noted that the interface 80 of Figure 15 and the gateway 90 of Figure 16 provide examples of service requests being passed to the service control subsystem by entities other than SSPs 41.

### WWW-based "FreePhone" (800 number) Services

It is possible to implement a "FreePhone" or "800 number" type of service using a combination of the WWW and the PSTN. As will be seen from the following description of such a service with reference to Figure 17, a WWW/PSTN implementation does not necessarily rely either on transferring call charges from the calling to called party or on the use of a special "800" number, two characteristics of standard "Freephone" schemes. The WWW/PSTN implementations do, however, possess the more general characteristic of placing an enquiring party and the party to whom the enquiry is directed, in telephone contact at the expense of the latter party.

In the Figure 17 arrangement, a user D such as a large department store has a website on a server 51; for the sake of simplicity, it will be assumed that the server is under the control of user D who has direct computer access to the server over line 125. D's Website may, for example, contain many catalogue-like Web pages illustrating goods offered for sale by D. In addition, D has a freephone page 124 for handling enquiries placed on a freephone basis; the URL of this page is associated with a "freephone" graphical button 122 placed on each of the Website catalogue pages.

Suppose user A at terminal 53 is browsing D's Website, looking at the catalogue pages (arrow 121). If A sees an item of interest and wishes to make an enquiry to D about this item, then A can activate at terminal 53 the graphical freephone button 122 associated with the catalogue page concerned. This activation causes code embedded in the catalogue page currently loaded in A's terminal to prompt the user to enter their telephone number and, optionally, their name, after which an HTTP request is sent to D's freephone page using the POST method and enclosing the entered data (arrow 123). D's freephone page on receiving this request executes service logic to enter a new enquiry (including A's name and telephone number) in an enquiry queue 127 maintained in an enquiry control system 126. In the present example, the enquiry control system is connected to the server 51 via line 125, externally of the Internet; however, it would also be possible to have server 51 communicate with the enquiry control system through the Internet and, indeed, this may be the most practical arrangement where D's Website is on an ISP server rather than on a server controlled by D. In fact, the code run in A's terminal upon activation of the freephone graphical button 122 could be arranged to directly forward the enquiry request to the enquiry control system over the Internet rather than passing it back through the server 51.

The enquiry control system 126 manages enquiries passed to it to ensure that they are dealt with in an ordered manner. The system 126 on receiving a new enquiry preferably estimates approximately how long it will be before the enquiry is dealt with, this estimation being based on the number of currently queued enquiries and the average time taken to handle an enquiry. This estimation of waiting time is passed back via server 51 to user A in the response to the POST request message.

The enquiry control system 126 looks after the distribution of enquiries to a number of agents each of which is equipped with a telephone 40 and a display 129. A's enquiry will be dealt with as soon as it reaches the head of the queue 127 and there is an agent detected as available to handle the enquiry (thus, for example, the system may be arranged to detect when an agent's telephone goes on hook). When these conditions are met, a distribution and setup control unit 128 takes A's enquiry and displays A's name and telephone number on the display 129 of the available agent (for clarity, herein referenced as agent D'); if user D keeps a database on D's past customers or credit rating data, then unit 128 will also look for and display any such further information known about A. At the same time, unit 128 makes a third-party call setup request (arrow 130) over the Internet to gateway 90 asking for a call to be set up between the telephone of the available agent D' and the telephone of user A, both telephones being identified by their respective numbers. If both D' and A pick up the call, the enquiry then proceeds, the cost of the call being paid for by D as it is D that originated the call over the PSTN. If, for whatever reason, the call remains incomplete (for example, unanswered by A) for a predetermined timeout period, then unit 128 can be arranged to automatically pass on to the next enquiry at the head of the queue 127.

It would, of course, be possible to dispense with having the unit 128 request call setup through gateway 90 and either have the agent D' dial A's number manually or have unit 126 initiate auto-dialling for D' telephone (agent D' having, for example, a computer-integrated telephone similar to that of A's in Figure 14). The advantageof these approaches is that the existing PSTN could be used without adaption and without any service installation, in implementing the WWW-based freephone service.

As discussed in relation to Figures 11 and 13, a complication arises in placing a call to A if A only has Internet access via a SLIP/PPP connection over an ordinary, non-ISDN, PSTN line since, in this case, A's telephone line is already tied up with making Internet access when user D tries to set up a call to A's telephone. The solutions discussed in respect of Figures 11 and 13 can also be used here (termination of Internet session; multiplexing voice and Internet data on same telephone line; and placing the call over the Internet to A's terminal). With respect to the solution based on termination of the Internet session, such termination could be delayed until A's enquiry was about to be dealt with; however, to do this, it would be necessary to provide feedback from the control system 126 over the Internet to A's terminal 53 and to associate this feedback with code for bringing about Internet-session termination. One way to achieve this would be to have the response message sent by server 51 in reply to the original POST request message from A, include a correlation code; any subsequent feedback from system 126 passed to A would also include this code (server A having also passed the code to control system 126) thereby allowing A's terminal to correctly identify this feedback. In fact, the same mechanism could be used to provide user A with updates on how much longer user A is likely to be waiting to be called back, this mechanism being usable independently of whether or not there was a conflict problem for use of A's telephone line.

Where user A only has a telephone 40 and no terminal 53, it is still possible to utilise the basic structure of Figure 17 to provide a freephone service for user A without resorting to the complexity of call charge transfer. More particularly, A would dial a special number for user D's freephone service (typically an 800 number), and the SSP 41 would recognise this special number in standard manner and make a service request to SCP 43 including both this special number and A's number. SCP 43 would then ascertain D's freephone-page URL by doing a number-to-URL translation and access D's freephone page using a POST-method HTTP request similar to request 123. Once this request had been registered as an enquiry by D's freephone page 124, the lattter could send a response to SCP 43 asking it to play an announcement such as "Your freephone enquiry has been registered; please hang up and you will be contacted shortly". This announcement could be played to A by an IP in standard manner. A would then hang up and be ready to receive a call from D.

A significant advantage of the above freephone schemes using WWW, is that user D is not running up charges for use of the PSTN during periods when an enquiry is enqueued, waiting to be handled.

### Variants

In the foregoing examples, the service resource items have been placed on servers 51 connected to the Internet and a desired service resource has then been accessed over the Internet by the service control subsystem of the PSTN, and/or by Internet users, through the use of an URI derived from a resource code that identifies the desired service resource item. In the arrangement for deriving the URI from a resource code in the form of a telephone number, all or part of the telephone number concerned was parsed into domain name form and then resolved into an URI using a DNS-type distributed database system that, indeed, could be integrated into the DNS itself (see Figures 11 and 12, and related description).

Many variants are, of course, possible to the above-described arrangements and a number of these variants are described below.

As is illustrated in Figure 15, the SCP 43 may access the HTTP servers 51 through a distributed processing environment, DPE 98, at least logically separate from the Intemet.

Preferably in this case the servers 51 are controlled by PSTN operators and are thus restricted in number.

Whilst the service control subsystem of the PSTN has been embodied as an SCP in the foregoing examples, it will be appreciated that the functionality of the service control subsystem could be provided as part of an SSP or in an associated adjunct. Furthermore, the triggering of service requests can be effected by equipment other than SSPs, for example by intercept boxes inserted in the SS7 signalling links.

The present invention can also be applied to telephone systems other than just PSTNs, for example to PLMNs and other mobile networks, and to private systems using PABXs. In this latter case, a LAN or campus-wide computer network serving generally the same internal users as the PABX, will take the role of the Internet in the described embodiments.

Furthermore, the present invention has application where any switched telecommunication system (for example, a broadband ATM system) requires service control and a computer network can be used for the delivery of service resources to the service control subsystem of the telecommunication system.

## Claims

1. A method of accessing communication data relevant to a target entity (B) identified by a number string ('B-Webtel'), said method comprising the steps of:
a) storing in a domain-name-system type of database system, records each associated with a corresponding domain name and holding an Uniform Resource Identifier, URI for locating communications data associated with the domain name, each said domain name being related to a respective number string ('B-Webtel') from which it can be derived by a process including parsing (120) at least a substantial portion of the number string into at least a part of said domain name;
b) applying said process (120) to the said number string ('B-Webtel') identifying the target entity whereby to form the related domain name;
c) supplying (121) the domain name formed in step b) to the DNS-type database system to retrieve the URI held in the corresponding said record; and
d) using (123) the URI retrieved in step c) to access said communication data.

2. A method according to claim 1, wherein the URI held in at least one said record is the URI for said communications data itself.

3. A method according to claim 1, wherein the URI held in at least one said record is of functionality (51,58, 64) that has access to multiple items (49) of communications data, step d) involving using the URI to access said functionality and supply it with an indicator (RRI) of the desired item of communications data, this data then being returned by the functionality.

4. A method according to claim 3, wherein the indicator (RRI) is incorporated into said URI and supplied in this form to said functionality.

5. A method according to claim 3, wherein the indicator (RRI) is supplied to said functionality as a separate element to said URI.

6. A method according to any one of the preceding claims, wherein the URI held in at least one said record is an Uniform Resource Locator, URL, including an access scheme and host address.

7. A method according to claim 6, wherein said host address is a domain name.

8. A method according to any one of the preceding claims, wherein each said number string ('B-Webtel') is in telephone-number form.

9. A method according to any one of the preceding claims, wherein the DNS-type distributed database is the domain name system of the Internet (50).

10. A method of accessing a target entity (B) over a telephone network ('PSTN') comprising the steps of :
- accessing communications data relevant to the target entity (B) according to the method of any one of the preceding claims, wherein the communication data are in the form of a telephone number for the target entity (B), and
- using this telephone number to call the target entity (B) over the telephone network.

11. A computer program product intended for use with a computing resource (46;53) having connectivity to a computer network (50), to enable access to remotely-stored communications data concerning a target entity (B); the computer program product being arranged to provide the computing resource, when executing the computer program, with:
- first means (46) for forming, from a number string ('B-Webtel') identifying the target entity (B), a domain name by a process including parsing (120) at least a substantial portion of the number string into at least a part of said domain name;
- second means (46) operative to use the network connectivity of the computing resource to supply said domain name to a domain-name-system, DNS, type of database system and to receive back a resource record including an Uniform Resource Identifier, URI, for locating communications data associated with the domain name; and
- third means (46) for using said URI to access said communications data.

12. A product according to claim 11, wherein said URI is the URI of said communications data itself.

13. A product according to claim 11, wherein said URI is of functionality (51,58, 64) that has access to multiple items (49) of communications data, the third means (46) being operative to use this URI to access said functionality and supply it with an indicator of the desired item of communications data, and to receive back this item from the functionality.

14. A product according to claim 13, wherein the third means is operative to incorporate the indicator into said URI and supply in this form to said functionality (51,58, 64).

15. A product according to claim 13, wherein the third means is operative to supply the indicator to said functionality (51,58, 64) as a separate element to said URI.

16. A product according to any one of claims 11 to 15, wherein the URI held in at least one said record is an Uniform Resource Locator, URL, including an access scheme and host address.

17. A product according to any one of claims 11 to 16, wherein the DNS-type distributed database is the domain name system of the Internet (50).

18. A server of a domain-name-system, DNS, type of distributed database system, the server holding at least one resource record (RR) for providing a mapping from a domain name associated with the record to an Uniform Resource Identifier, URI, that is held in the record and is usable for locating communications data for contacting a target entity (B), at least a substantial portion of the domain name being in the form of a number string ('B-Webtel'), identifying the target entity (B), that has been parsed into plural domain-name labels to be supplied to the DNS-type distributed database system for retrieval of the URI held in the corresponding record.

19. A server according to claim 18 , wherein said URI is an Uniform Resource Locator, URL, including an access scheme and host address for accessing said communications data.

20. A server according to claim 18, wherein said number string ('B-Webtel') is at least a substantial portion of a telephone number.

21. A server according to claim 18, wherein said URI is of functionality (51,58, 64) that has access to multiple items (49) of communications data.

22. A server according to any one of claims 18 to 21, wherein the DNS-type distributed database is the domain name system of the Internet (50).

## Patentansprüche

1. Ein Verfahren zum Zugreifen auf Kommunikationsdaten, die für eine Zielentität (B) relevant sind, die durch eine Zahlenzeichenfolge ("B-Webtel") identifiziert werden, wobei das Verfahren folgende Schritte umfasst:
a) Speichern von Datensätzen in einem Datenbanksystem vom Domain-Name-System-Typ, die jeweils einem entsprechendem Domainnamen zugeordnet sind und einen Einheitsressourcenidentifizierer, URI, halten, zum Lokalisieren von Kommunikationsdaten, die dem Domainnamen zugeordnet sind, wobei jeder Domainname auf eine jeweilige Zahlenzeichenfolge ("B-Webtel") bezogen ist, aus der derselbe durch einen Prozess abgeleitet werden kann, der ein syntaktisches Analysieren (120) von zumindest einem wesentlichen Abschnitt der Zahlenzeichenfolge in zumindest einen Teil des Domainnamens umfasst;
b) Anwenden des Prozesses (120) auf die Zahlenzeichenfolge ("B-Webtel"), die die Zielentität identifiziert, wodurch der verwandte Domainname gebildet wird;
c) Zuführen (121) des Domainnamens, der in Schritt b) gebildet wird, zu dem DNS-Typ-Datenbanksystem, um den URI wiederzugewinnen, der in dem entsprechenden Datensatz gespeichert ist; und
d) Verwenden (123) des URI, der in Schritt c) wiedergewonnen wird, um auf die Kommunikationsdaten zuzugreifen.

2. Ein Verfahren gemäß Anspruch 1, bei dem der URI, der in zumindest einem der Datensätze gespeichert ist, der URI für die Kommunikationsdaten selbst ist.

3. Ein Verfahren gemäß Anspruch 1, bei dem der URI, der in zumindest einem der Datensätze gespeichert ist, von einer Funktionalität (51, 58, 64) ist, die Zugriff zu mehreren Elementen (49) von Kommunikationsdaten hat, wobei Schritt d) das Verwenden des URI umfasst, um auf die Funktionalität zuzugreifen und derselben einen Indikator (RRI) des gewünschten Elements von Kommunikationsdaten zuzuführen, wobei diese Daten dann durch die Funktionalität zurückgesendet werden.

4. Ein Verfahren gemäß Anspruch 3, bei dem der Indikator (RRI) in dem URI enthalten ist und in dieser Form zu der Funktionalität zugeführt wird.

5. Ein Verfahren gemäß Anspruch 3, bei dem der Indikator (RRI) als ein von dem URI getrenntes Element zu der Funktionalität zugeführt wird.

6. Ein Verfahren gemäß einem der vorhergehenden Ansprüche, bei dem der URI, der in der zumindest einem der Datensätze gespeichert ist, ein Einheitsressourcenlokator, URL, ist, der ein Zugriffsschema und eine Hostadresse umfasst.

7. Ein Verfahren gemäß Anspruch 6, bei dem die Hostadresse ein Domainname ist.

8. Ein Verfahren gemäß einem der vorhergehenden Ansprüche, bei dem jede Zahlenzeichenfolge ("B-Webtel") in Telefonnummerform ist.

9. Ein Verfahren gemäß einem der vorhergehenden Ansprüche, bei dem die verteilte DNS-Typ-Datenbank das Domainnamensystem des Internets (50) ist.

10. Ein Verfahren zum Zugreifen auf eine Zielentität (B) über ein Telefonnetzwerk ("PSTN"), das folgende Schritte umfasst:
Zugreifen auf Kommunikationsdaten, die relevant für die Zielentität (B) sind, gemäß dem Verfahren von einem der vorhergehenden Ansprüche, wobei die Kommunikationsdaten in der Form einer Telefonnummer für die Zielentität (B) sind, und
Verwenden dieser Telefonnummer zum Anrufen der Zielentität (B) über das Telefonnetz.

11. Ein Computerprogrammprodukt, das für die Verwendung mit einer Rechnerressource (46; 53) vorgesehen ist, die eine Anschlussfähigkeit zu einem Computernetz (50) aufweist, um einen Zugriff auf entfernt gespeicherte Kommunikationsdaten zu ermöglichen, die eine Zielentität (B) betreffen; wobei das Computerprogrammprodukt angeordnet ist, um der Rechenressource, wenn das Computerprogramm ausgeführt wird, folgendes bereitzustellen:
- eine erste Einrichtung (46) zum Bilden eines Domainnamens aus einer Zahlenzeichenfolge ("B-Webtel"), die die Zielentität (B) identifiziert, durch einen Prozess, der ein syntaktisches Analysieren (120) von zumindest einem wesentlichen Abschnitt der Zahlenzeichenfolge in zumindest einen Teil des Domainnamens umfasst;
- eine zweite Einrichtung (46), die wirksam ist, um die Netzwerkanschlussfähigkeit der Rechenressource zu verwenden, um den Domainnamen einem Datenbanksystem vom Domainnamensystem-, DNS-, Typ zuzuführen und einen Ressourcendatensatz zurückempfangen, der einen einheitlichen Ressourcenidentifizierer, URI, zum Lokalisieren von Kommunikationsdaten umfasst, die dem Domainnamen zugeordnet sind; und
- eine dritte Einrichtung (46) zum Verwenden des URI zum Zugreifen auf die Kommunikationsdaten.

12. Ein Produkt gemäß Anspruch 11, bei dem der URI der URI der Kommunikationsdaten selbst ist.

13. Ein Produkt gemäß Anspruch 11, bei dem der URI eine Funktionalität (51, 58, 64) aufweist, die Zugriff auf mehrere Elemente (49) von Kommunikationsdaten hat, wobei die dritte Einrichtung (46) wirksam ist, um diesen URI zu verwenden, und um auf die Funktionalität zuzugreifen, und demselben einen Indikator des gewünschten Elements von Kommunikationsdaten zuzuführen, und dieses Element von der Funktionalität zurückzuempfangen.

14. Ein Produkt gemäß Anspruch 13, bei dem die dritte Einrichtung wirksam ist, um den Indikator in den URI aufzunehmen und in dieser Form der Funktionalität (51, 58, 64) zuzuführen.

15. Ein Produkt gemäß Anspruch 13, bei dem die dritte Einrichtung wirksam ist, um einen Indikator zu der Funktionalität (51, 58, 64) als ein von dem URI getrenntes Element zu liefern.

16. Ein Produkt gemäß einem der Ansprüche 11 bis 15, bei dem der URI, der in zumindest einem der Datensätze gespeichert ist, ein Einheitsressourcenlokator, URL, ist, der ein Zugriffsschema und eine Hostadresse umfasst.

17. Ein Produkt gemäß einem der Ansprüche 11 bis 16, bei dem die verteilte DNS-Typ-Datenbank das Domainnamensystem des Internets (50) ist.

18. Ein Server eines Domainnamensystem-, DNS-, Typs eines verteilten Datenbanksystems, wobei der Server zumindest einen Ressourcendatensatz (RR) hält, zum Bereitstellen einer Abbildung von einem Domainnamen, der dem Datensatz zugeordnet ist, auf einen Einheitsressourcenidentifizierer, URI, der in dem Datensatz gehalten wird, und verwendet werden kann, um Kommunikationsdaten zum Kontaktieren einer Zielentität (B) zu finden, wobei zumindest ein wesentlicher Abschnitt des Domainnamens in der Form einer Zahlenzeichenfolge ("B-Webtel") ist, die die Zielentität (B) identifiziert, die in mehrere Domainnamenetiketten zerlegt wurde, um dem verteilten DNS-Typ-Datenbanksystem zugeführt zu werden, für eine Wiedergewinnung des URI, der in dem entsprechenden Datensatz gehalten wird.

19. Ein Server gemäß Anspruch 18, bei dem der URI ein Einheitsressourcenlokator, URL, ist, der ein Zugriffsschema und eine Hostadresse zum Zugreifen auf die Kommunikationsdaten umfasst.

20. Ein Server gemäß Anspruch 18, bei dem die Zahlenzeichenfolge ("B-Webtel") zumindest ein wesentlicher Abschnitt einer Telefonnummer ist.

21. Ein Server gemäß Anspruch 18, bei dem der URI von einer Funktionalität (51, 58, 64) ist, die Zugriff auf mehrere Elemente (49) von Kommunikationsdaten hat.

22. Ein Server gemäß einem der Ansprüche 18 bis 21, bei dem die verteilte DNS-Typ-Datenbank das Domainnamensystem des Internets (50) ist.

## Revendications

1. Un procédé d'accès à des données de communication concernant une entité cible (B) identifiée par une chaîne numérique ("B-Webtel"), ledit procédé comprenant les étapes consistant à:
a) mémoriser, dans un système de base de données répartie du type système de noms de domaines ou type DNS selon les initiales de Domain name system, des enregistrements associés chacun à un nom correspondant de domaine et contenant un identifiant de ressource uniforme, ou URI selon les initiales de Uniform resource identifier, pour localiser des données de communication associées au nom de domaine, chacun desdits noms de domaine étant lié à une chaîne numérique respective ("B-Webtel") à partir de laquelle il peut être dérivé par un processus qui inclut une étape consistant à découper (120) au moins une partie substantielle de la chaîne numérique pour former au moins une partie dudit nom de domaine;
b) appliquer ledit processus (120) à ladite chaîne numérique ("B-Webtel") qui identifie l'entité cible afin de former ainsi le nom de domaine lié;
c) fournir (121) le nom de domaine formé à l'étape b) au système de base de données de type DNS pour restituer l'URI contenu dans ledit enregistrement correspondant; et
d) utiliser (123) l'URI restitué à l'étape c) pour accéder auxdites données de communications.

2. Un procédé selon la revendication 1, dans lequel l'URI contenu dans au moins l'un desdits enregistrements est l'URI pour lesdites données de communication lui-même.

3. Un procédé selon la revendication 1, dans lequel l'URI contenu dans au moins l'un desdits enregistrements est d'une fonctionnalité (51, 58, 64) qui peut accéder à de multiples éléments (49) de données de communication, l'étape d) impliquant l'utilisation de l'URI pour accéder à ladite fonctionnalité et pour la fournir avec un indicateur (RRI, c'est-à-dire identifiant de ressource relatif selon les initiales de Relative resource identifier) de l'élément souhaité de données de communication, ces données étant ensuite renvoyées par la fonctionnalité.

4. Un procédé selon la revendication 3, dans lequel l'indicateur (RRI) est incorporé dans ledit URI et est fourni sous cette forme à ladite fonctionnalité.

5. Un procédé selon la revendication 3, dans lequel l'indicateur (RRI) est fourni à ladite fonctionnalité en tant qu'élément séparé, en dehors dudit URI.

6. Un procédé selon l'une quelconque des revendications précédentes, dans lequel l'URI contenu dans au moins l'un desdits enregistrements est un localisateur uniforme de ressource, URL selon les initiales de Uniform resource locator, qui inclut une méthode d'accès d'une adresse d'hôte.

7. Un procédé selon la revendication 6, dans lequel ladite adresse d'hôte est un nom de domaine.

8. Un procédé selon l'une quelconque des revendications précédentes, dans lequel chacune desdites chaînes numériques ("B-Webtel") est en forme de numéro de téléphone.

9. Un procédé selon l'une quelconque des revendications précédentes, dans lequel la base de données répartie de type DNS est le système de noms de domaines de l'Internet (50).

10. Un procédé d'accès à une entité cible (B) par un réseau téléphonique ("PSTN" selon les initiales de Public switched telephone network, littéralement réseau de télécommunications public commuté) qui comprend les étapes consistant à:
- accéder à des données de communication concernant l'entité cible (B) selon le procédé de l'une quelconque des revendications précédentes, dans lequel les données de communication sont en forme de numéro de téléphone pour l'entité cible (B), et
- utiliser ce numéro de téléphone pour appeler l'entité cible (B) par le réseau téléphonique.

11. Un produit programme informatique prévu pour être utilisé avec une ressource informatique (46; 53) qui possède une connectivité à un réseau informatique (50), pour permettre d'accéder à des données de communication mémorisées à distance concernant une entité cible (B); le produit programme informatique étant agencé de manière à fournir la ressource informatique, lors de l'exécution du programme informatique, au moyen de:
- un premier moyen (46) de formation d'un nom de domaine, à partir d'une chaîne numérique ("B-Webtel") qui identifie l'entité cible (B), par un processus qui inclut une étape consistant à découper (120) au moins une partie substantielle de la chaîne numérique pour former au moins une partie dudit nom de domaine;
- un deuxième moyen (46) qui peut intervenir pour utiliser la connectivité de réseau de la ressource informatique pour fournir ledit nom de domaine à un système de base de données du type système de noms de domaines ou type DNS, et pour recevoir en retour un enregistrement de ressource qui inclut un identifiant de ressource uniforme, URI, pour localiser des données de communication associées au nom de domaine; et
- un troisième moyen (46) d'utilisation dudit URI pour accéder auxdites données de communication.

12. Un produit selon la revendication 11, dans lequel ledit URI est l'URI desdites données de communication lui-même.

13. Un produit selon la revendication 11, dans lequel ledit URI est d'une fonctionnalité (51, 58, 64) qui peut accéder à de multiples éléments (49) de données de communication, le troisième moyen (46) pouvant intervenir pour utiliser cet URI pour accéder à ladite fonctionnalité et la fournir avec un indicateur de l'élément souhaité de données de communication, et pour recevoir en retour cet élément à partir de ladite fonctionnalité (51, 58, 64).

14. Un produit selon la revendication 13, dans lequel le troisième moyen peut intervenir pour incorporer l'indicateur dans ledit URI et le fournir sous cette forme à ladite fonctionnalité (51, 58, 64).

15. Un produit selon la revendication 13, dans lequel le troisième moyen peut intervenir pour fournir l'indicateur à ladite fonctionnalité (51, 58, 64) en tant qu'élément séparé, en dehors dudit URI.

16. Un produit selon l'une quelconque des revendications 11 à 15, dans lequel l'URI contenu dans au moins l'un desdits enregistrements est un localisateur uniforme de ressource, URL, qui inclut une méthode d'accès et une adresse d'hôte.

17. Un produit selon l'une quelconque des revendications 11 à 16, dans lequel la base de données répartie du type DNS est le système de noms de domaines de l'Internet (50).

18. Un serveur d'un système de base de données répartie du type système de noms de domaines ou type DNS, le serveur contenant au moins un enregistrement de ressource (RR selon les initiales de Resource record) pour fournir une application, à partir d'un nom de domaine associé à l'enregistrement, à un identifiant de ressource uniforme ou URI qui est contenu dans l'enregistrement et est utilisable pour localiser des données de communication pour prendre contact avec une entité cible (B), au moins une partie substantielle du nom de domaine étant en forma de chaîne numérique ("B-Webtel"), identifiant l'entité cible (B), qui a été découpée en plusieurs étiquettes de noms de domaines pour être fournie au système de base de données répartie du type DNS pour restitution de l'URI contenu dans l'enregistrement correspondant.

19. Un serveur selon la revendication 18, dans lequel ledit URI est un localisateur de ressources uniforme ou URL qui inclut une méthode d'accès et une adresse d'hôte pour accéder auxdites données de communication.

20. Un serveur selon la revendication 18, dans lequel ladite chaîne numérique ("B-Webtel") est au moins une partie substantielle d'un numéro de téléphone.

21. Un serveur selon la revendication 18, dans lequel ledit URI est d'une fonctionnalité (51, 58, 64) qui peut accéder à de multiples éléments (49) de données de communication.

22. Un serveur selon l'une quelconque des revendications 18 à 21, dans lequel la base de données répartie de type DNS est le système de noms de domaines de l'Internet (50).
